# EUROPÄISCHE PATENTANMELDUNG

(11) **EP 4 843 763 A1**
(43) Veröffentlichungstag der Anmeldung: **25.11.2026**
(21) Anmeldenummer: 26177042.4
(22) Anmeldetag: 06.05.2026
(51) Int. Cl.: B29D 30/00, G05B 19/418

(54) **FERTIGUNGSANLAGE FÜR DIE HERSTELLUNG VEREINZELTER STREIFENFÖRMIGER LAMINATBAUTEILE ENTHALTEND EIN ZWISCHEN ZWEI LAMINATSCHICHTEN AUS EINEM BANDFÖRMIGEN MATERIAL EINGEBETTETES ELEKTRONISCHES BAUTEIL, VERFAHREN ZUR ÜBERWACHUNG EINER SOLCHEN FERTIGUNGSANLAGE, COMPUTERPROGRAMM UND ELEKTRONISCH LESBARER DATENTRÄGER**

(30) Priorität: 15.05.2025 DE 102025118821
(71) Anmelder: Fischer TireTech Germany GmbH, 96224 Burgkunstadt (DE)
(72) Erfinder: Schmidt, Frank, 95349 Thurnau (DE)
(74) Vertreter: Lindner Blaumeier Patent- und Rechtsanwälte

(57) **Zusammenfassung**

Fertigungsanlage (1) für die Herstellung vereinzelter streifenförmiger Laminatbauteile enthaltend ein zwischen zwei Laminatschichten (3, 8) aus einem bandförmigen Material, insbesondere einem gummierten Material, eingebettetes elektronisches Bauteil (41), wobei die Fertigungsanlage (1) mehrere materialbearbeitende und/oder materialfördernde, in Abhängigkeit von Betriebsparametern ansteuerbare Fertigungskomponenten, eine Steuereinrichtung (14) zur Ansteuerung der Fertigungskomponenten und eine Bedieneinrichtung (30) aufweist, wobei die Steuereinrichtung (14) eine Überwachungseinrichtung (29) zur Überwachung des Betriebs wenigstens einer zu überwachenden der Fertigungskomponenten aufweist, welche wenigstens eine Einzelschrittkomponente (43, 44 45) zur Ausführung von Einzelschritten eines Zyklus zur Einwirkung auf das Material umfasst, wobei an der zu überwachenden Fertigungskomponente wenigstens ein Zykluszeiterfassungsmittel (33) zur Erfassung einer Zykluszeit des Zyklus vorgesehen ist und die Überwachungseinrichtung (29) aufweist:
- eine Überwachungseinheit (35) zur Auswertung von von dem Zykluszeiterfassungsmittel (33) erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit (36) zur Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

## Beschreibung

Fertigungsanlage für die Herstellung vereinzelter streifenförmiger Laminatbauteile enthaltend ein zwischen zwei Laminatschichten aus einem bandförmigen Material eingebettetes elektronisches Bauteil, Verfahren zur Überwachung einer solchen Fertigungsanlage, Computerprogramm und elektronisch lesbarer Datenträger

Die Erfindung betrifft eine Fertigungsanlage für die Herstellung vereinzelter streifenförmiger Laminatbauteile enthaltend ein zwischen zwei Laminatschichten aus einem bandförmigen Material, insbesondere einem gummierten Material, eingebettetes elektronisches Bauteil, aufweisend mehrere materialbearbeitende und/oder materialfördernde, in Abhängigkeit von Betriebsparametern ansteuerbare Fertigungskomponenten, eine Steuereinrichtung zur Ansteuerung der Fertigungskomponenten und eine Bedieneinrichtung, wobei die Steuereinrichtung eine Überwachungseinrichtung zur Überwachung des Betriebs wenigstens einer zu überwachenden der Fertigungskomponenten aufweist, welche wenigstens eine Einzelschrittkomponente zur Ausführung von Einzelschritten eines Zyklus zur Einwirkung auf das Material umfasst. Daneben betrifft die Erfindung ein computerimplementiertes Verfahren zur Überwachung einer solchen Fertigungsanlage, ein Computerprogramm und einen elektronisch lesbaren Datenträger.

Fertigungsanlagen, in denen zwei Laminatschichten aus einem bandförmigen Material, insbesondere einem gummierten Material, und elektronische Bauteile zur Herstellung vereinzelter streifenförmiger Laminatbauteile in denen das elektronische Bauteil eingebettet ist, verarbeitet werden, sind im Stand der Technik grundsätzlich bekannt. Häufig sind die elektronischen Bauteile dabei RFID-Chips, die zur Kennzeichnung, beispielsweise in der Reifenindustrie, verwendet werden können. In einem solchen Fall kann eine solche Fertigungsanlage auch als RFID-Laminieranlage bezeichnet werden. Die Fertigungsanlage kann insgesamt auch als Maschine oder Einrichtung zur Herstellung von Laminatbauteilen, insbesondere in der Reifenindustrie, verstanden werden. Das Laminatbauteil bildet mithin das Fertigungsprodukt.

Beispielsweise kann das Laminatbauteil als schmaler Streifen an einem Gegenstand angeordnet werden oder in diesem integriert werden. Das Materialband in dem Laminatband dient als Träger für das elektronische Bauteil. Bei dem Materialband handelt es sich insbesondere um ein flexibles Bandmaterial aus Kunststoff, vorzugsweise aus einem gummierten Material, wobei hierunter industriell gefertigte Elastomere verstanden werden. Je nach Material kann dieses auch klebrig sein. Bei dem elektronischen Bauteil kann es sich um ein beliebiges Bauteil handeln, das in irgendeiner Weise in Wechselwirkung mit einem externen Erfassungsgerät treten kann. Insbesondere kann es sich bei dem Bauteil um einen RFID-Chip handeln, auf dem definierte Informationen gespeichert werden können, die dann am jeweiligen, mit dem RFID-Chip bestückten Gegenstand ausgelesen werden können, bei Kennzeichnungszwecken beispielsweise zu dessen Identifikation.

Ein wichtiges Anwendungsgebiet für derartige Laminatbauteile ist die Reifenindustrie. Durch die Integration eines solchen Laminatbauteils in den Reifen bei der Herstellung wird jeder einzelne Reifen individuell mit einem solchen Kennzeichnungselement, also beispielsweise einem RFID-Chip, versehen, so dass er identifiziert werden kann. Auf dem RFID-Chip können beispielsweise entsprechende Informationen bezüglich des Herstellungsdatums, der Herstellungscharge, des zulässigen Befülldrucks etc. abgelegt und bei Bedarf ausgelesen werden. Auch Anwendungen in anderen Bereichen sind selbstverständlich denkbar.

Zur Herstellung solcher Laminatbauteilstreifen ist es bekannt, zunächst ein endloses Laminatband mit den eingebetteten Bauteilen herzustellen. Hierzu werden die vereinzelten Bauteile, beispielsweise RFID-Chips, auf eine bandförmige, untere erste Laminatschicht aus dem beschriebenen Material in definierten Abständen mit einer Auflegeeinrichtung aufgelegt. Die erste Laminatschicht wird über ein Transportmittel in eine definierte Förderrichtung bewegt. Auf diese mit den Bauteilen belegte erste Laminatschicht wird sodann eine ebenfalls in Förderrichtung bewegte, bandförmige, obere zweite Laminatschicht gelegt, so dass die Bauteile eingebettet werden und sich ein Laminatband bildet. Es ergibt sich demzufolge ein Sandwich-Band, also ein zweilagiges gummiertes Laminatband, dessen einzelne Lagen aber aufgrund deren Haftung bzw. Klebrigkeit letztlich nicht mehr getrennt werden können.

Von diesem endlosen Materialband sind dann einzelne Streifen als Laminatbauteile abzuschneiden, wobei jeder Streifen wenigstens ein Bauteil aufweist. Hierbei sind sehr schmale Streifen zu schneiden, beispielsweise mit einer Streifenbreite im Bereich weniger Millimeter, zum Beispiel ca. 8 - 12 mm. Eine Schneideinrichtung, die sich insbesondere zum Schneiden eines derartigen Laminatbands eignet, ist beispielsweise aus DE 20 2021 101 889 U1 bekannt. Diese Schneideinrichtung umfasst eine Greifereinrichtung, die derart ausgestaltet ist, dass sie das Materialband während des Schnitts am Tisch der Schneideinrichtung, gegen welchen Tisch das Schneidmesser bewegt wird, fixiert. Fährt das Schneidmesser nieder, wird der Laminatstreifen enthaltend das wenigstens eine Bauteil geschnitten. Nachdem das Schneidmesser wieder hochgefahren ist, nimmt die Greifereinrichtung den geschnittenen Laminatstreifen auf und transportiert ihn ab. Dabei erfolgt die Zuführung des Laminatbands zu der Schneideinrichtung in den Schneidbereich über einen getakteten Vorschubbetrieb des Transportmittels, das heißt, dass das Laminatband für jeden einzelnen Schneidvorgang um eine definiertes Streckenmaß bzw. Wegstrecke, das bzw. die der gewünschten Schnittlänge entspricht, in Förderrichtung transportiert wird.

Eine beispielhafte insgesamte Fertigungsanlage für solche Laminatbauteile wird durch DE 10 2022 124 337 A1 beschrieben.

Die Beschreibung eines Fertigungsprodukts, das in einem Fertigungsprozess mittels einer solchen Fertigungsanlage angefertigt werden soll, wird durch einen Betriebsparametersatz von für diesen Fertigungsprozess unveränderlichen Betriebsparametern vorgegeben, der üblicherweise als Rezept oder MES bezeichnet wird. Neben einer allgemeinen Rezept-Identifikation (Rezept-ID) kann ein Rezept beispielsweise die Materialien und die gewünschte Breite der als Laminatbauteile abzuschneidenden Streifen umfassen. Ein Rezept wird also hauptsächlich durch die Anforderungen an das Fertigungsprodukt beschrieben und ist von der konkreten Fertigungsanlage unabhängig. Es kann allerdings Anforderungen an die Fertigungsgeschwindigkeit und/oder die Ausbringung, also die produzierte Menge pro Zeiteinheit, enthalten.

Allgemein gesagt kann es, wenn bei der Produktion von Laminatbauteilen ein Problem, beispielsweise eine Fehlfunktion, eine Beschädigung und/oder ein Verschleiß an einer Fertigungskomponente, eingeschränkte Sensordatenerfassung, ein Steuerfehler oder dergleichen auftritt, zu verschiedenen, ungewünschten Effekten kommen. Während in weniger problematischen Fällen die Ausbringung beispielsweise deutlich reduziert werden kann, führen derartige Abweichungen vom ordnungsgemäßen Ablauf eines Fertigungsvorgangs häufig auch zu einer Ausschussproduktion oder in seltenen Fällen sogar zu einer, gegebenenfalls weiteren, Beschädigung einer Fertigungskomponente. Daher ist es bekannt, den Betrieb von Fertigungsanlagen während eines Fertigungsvorgangs durch einen Benutzer regelmäßig oder dauerhaft zu überwachen, gegebenenfalls unterstützt durch Sensorik, die beispielsweise Abweichungen vom gewünschten Fertigungsergebnis detektieren kann. Eine Feineinstellung und Optimierung des Fertigungsvorgangs erfolgt mittels visueller Beobachtung durch einen Benutzer, mithin benutzerabhängig, da häufig ein unterschiedliches Empfinden vorliegt. Für viele Anpassungen von Betriebsparametern muss ein Stillstand der Fertigungsanlagen erfolgen, was auch für eine Überprüfung bei potentiellen Problemen gilt. Die manuelle und genaue Erfassung während des Fertigungsvorgangs gestaltet sich schwierig. Hierzu kommt, dass das unterschiedliche Zusammenspiel und die Optimierung einzelner Komponenten aufgrund häufiger Rezeptwechsel, also Veränderungen im zu fertigenden Produkt, äußerst vielfältig ist. Daher ist eine frühzeitige Erkennung von Abweichungen während des Fertigungsvorgangs durch den Benutzer zusätzlich erschwert. Eine vorausschauende Wartung ist nicht möglich.

Bei Fertigungsanlagen für Laminatbauteile, wie beschrieben, ist insbesondere vorgesehen, das Materialband getaktet um die jeweilige Streifenbreite vorzuschieben, also in den Bereich der Schneidvorrichtung zu transportieren. Die Streifenabschnittsbreite der Laminatbauteile liegt dabei im Bereich weniger Millimeter, beispielsweise ca. 8 bis 12 mm. Das bedeutet, die Taktung diesbezüglich ist sehr gering. Im Gegenzug dazu wird ein hoher Verarbeitungs-Zyklus (hohe Ausbringung in kurzer Zeit) bei solchen Fertigungsanlagen gewünscht. Die Überwachung dieser komplexen Zusammenwirkung ist dabei ebenso komplex. Hierzu kommt, dass die zugeführten elektronischen Bauteile, insbesondere RFID-Chips, zwar unterschiedlich ausgeführt sein können, aber allgemein sehr wertvoll bzw. teuer sind. Dies ist ein weiterer Grund, den Ausschuss in der Produktion zu minimieren.

Der Erfindung liegt daher die Aufgabe zugrunde, eine einfach umsetzbare, hochgenaue und robuste Überwachung des Betriebs einer Fertigungsanlage für Laminatbauteile mit eingebetteten elektronischen Bauteilen anzugeben.

Zur Lösung dieser Aufgabe ist bei einer Fertigungsanlage der eingangs genannten Art erfindungsgemäß vorgesehen, dass an der zu überwachenden Fertigungskomponente wenigstens ein Zykluszeiterfassungsmittel zur Erfassung einer Zykluszeit des Zyklus vorgesehen ist und die Überwachungseinrichtung aufweist:
- eine Überwachungseinheit zur Auswertung von von dem Zykluszeiterfassungsmittel erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit zur Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

Der Betrieb der Fertigungsanlage während des Fertigungsvorgangs wird durch Betriebsparameter beschrieben, wobei üblicherweise feste und einstellbare Betriebsparameter vorliegen. Mit dem Attribut "einstellbar" für Betriebsparameter ist vorliegend gemeint, dass der Wert des Betriebsparameters während des Herstellungsprozesses eines bestimmten, durch Vorgabeparameter beschreibbaren Fertigungsprodukts, also eines Laminatbauteils, veränderbar ist. Insbesondere handelt es sich dabei um solche Betriebsparameter, die innerhalb eines sogenannten Rezepts einstellbar sind. Ein Rezept umfasst grundsätzlich von der konkreten Fertigungsanlage unabhängige Betriebsparameter, die wenigstens das Fertigungsprodukt beschreiben (also die Vorgabeparameter umfassen) und optional zusätzlich Herstellungsbedingungen beschreiben können, beispielsweise eine gewünschte Ausbringung. Typische Vorgabeparameter können beispielsweise eine Breite des Laminatbauteils, eine generelle Materialangabe und/oder eine Art des elektronischen Bauteils, insbesondere RFID-Chips, umfassen. Ein Teil der Betriebsparameter eines Rezepts können auch als eine Rezept-ID zusammengefasst sein.

Betriebsparameter, die das Rezept definieren bzw. bei Veränderung dieses verändern würden, können während des Fertigungsvorgangs für das Fertigungsprodukt, also während der Umsetzung des Rezepts, nicht geändert werden. Die Betriebsparameter des Rezepts werden, beispielsweise in einem Rezeptdatensatz, zu Beginn des Fertigungsvorgangs bereitgestellt, beispielsweise von einem Datenträger und/oder Server geladen und/oder eingegeben. Die Betriebsparameter eines Rezepts bzw. allgemein während eines Fertigungsvorgangs unveränderbare Betriebsparameter können als (Teil der) Fertigungsbedingungen verstanden werden bzw. solche beschreiben.

Ein einstellbarer Betriebsparameter muss nicht unmittelbar ein (beispielsweise in Steuersignale umzusetzender) Steuerparameter sein. Vielmehr sind auch abstraktere einstellbare Betriebsparameter denkbar, aus denen die Steuereinrichtung wenigstens einen, ggf. auch mehrere, Steuerparameter ableitet. Insbesondere kann der abstraktere einstellbare Betriebsparameter für die Bedienperson intuitiver verständlich sein, beispielsweise eine Korrektur angeben, die durch einen oder mehrere Steuerparameter dann konkret erreicht wird.

Erfindungsgemäß wird vorgeschlagen, eine Überwachung von Fertigungsvorgängen mittels Zykluszeiten vorzunehmen, die mittels wenigstens eines Zykluszeiterfassungsmittels erfasst werden. Das Zykluszeiterfassungsmittel kann insbesondere einen Teil der Steuereinrichtung bilden und beispielsweise zwischen Steuereinheiten und/oder Funktionseinheiten der Steuereinrichtung, ausgetauschte Steuersignale auswerten. Besonders bevorzugt ist die Steuereinrichtung als zentrale Steuereinrichtung zur Steuerung der gesamten Fertigungsanlage ausgestaltet, also als eine übergeordnete Steuerinstanz. Besonders bevorzugt bezieht sich die Überwachung auch auf mehrere oder sogar alle Fertigungskomponenten.

Mittels Steuersignalen werden also Zykluszeiten erfasst, bevorzugt mit einer Genauigkeit im Millisekundenbereich, beispielsweise mit einer Genauigkeit von wenigstens 10 bis 1 ms. Durch Auswertung der Zykluszeiten in Maßnahmenbedingungen, welche mit besonderem Vorteil Bezug auf bekannte Werte aus vorherigen und/oder optimierten Fertigungsvorgängen nehmen, insbesondere mit diesen vergleichen, können Abweichungen bzw. Anomalien im aktuellen Fertigungsvorgang, wie Untersuchungen im Rahmen der vorliegenden Erfindung gezeigt haben, besonders robust, genau und frühzeitig detektiert werden. Diese Art der Überwachung anhand der Zykluszeiten kann auch als eine Selbstdiagnose der Fertigungsanlage verstanden werden. Abweichungen bzw. Anomalien werden frühzeitig erkannt und können dem Benutzer, beispielsweise einem Operator, anhand der Steuermaßnahmen zur Kenntnis gebracht werden und/oder anhand der Steuermaßnahmen, insbesondere korrigierend, entschärft werden, sei es durch Kompensation der Abweichungen, Schutz von Fertigungskomponenten oder ihren Einzelschrittkomponenten (beispielsweise durch vorzeitige Beendigung des Fertigungsvorgangs) und dergleichen. Hinweise auf das Vorliegen der entsprechenden Anomalie, insbesondere Warnhinweise, können beispielsweise an Ausgabemitteln der Bedieneinrichtung ausgegeben werden, beispielsweise durch Aktivierung einer Signalleuchte und/oder Warnhinweise in einer Benutzerschnittstelle zur Steuerung.

Die Zykluszeiten werden bevorzugt zumindest im Wesentlichen in Echtzeit, also mit ihrem Vorliegen, durch die Maßnahmenbedingung(en) ausgewertet, sodass eine Entscheidung über eine durchzuführende Steuermaßnahme zeitnah getroffen werden kann.

Wenigstens eine der wenigstens einen Maßnahmenbedingung kann auch eine trainierte Auswertungsfunktion der künstlichen Intelligenz verwenden, insbesondere bei der Beurteilung komplexerer Fragestellungen. Hierbei können grundsätzlich bekannte Techniken des Maschinenlernens eingesetzt werden.

Es wurde mithin, allgemein gesprochen, erkannt, dass bei der Herstellung von Laminatbauteilen, in denen ein elektronisches Bauteil zwischen einer ersten und einer zweiten Laminatschicht angeordnet wird und ein Laminatstreifen geschnitten, besonders viele Einzelschrittkomponenten der Fertigungskomponenten sowie die Fertigungskomponenten untereinander abgestimmt je nach Rezept auf unterschiedlichste Art und Weise hochgenau zusammenwirken, wobei Zykluszeiten, insbesondere hinsichtlich der Einzelschritte (Teilschritte), worauf noch genauer eingegangen wird, sensibel auf Abweichungen reagieren und diese somit hochgenau und verlässlich anzeigen können. Insbesondere ist auf diese Weise sogar eine Lokalisierung der Abweichung möglich. Insbesondere das Zusammenspiel zwischen Platzierung des elektronischen Bauteils, Vorschub, Schnitt und Greifen ist dabei wesentlich.

In einer zweckmäßigen Weiterbildung kann vorgesehen sein, dass wenigstens ein weiteres Erfassungsmittel zur Erfassung wenigstens eines weiteren, den Betrieb der Fertigungsanlage beschreibenden Fertigungswertes vorgesehen ist, wobei wenigstens eine der wenigstens einen Maßnahmenbedingung wenigstens einen des wenigstens einen Fertigungswertes zusätzlich auswertet. Beispielsweise kann wenigstens einer des wenigstens einen weiteren Fertigungswerts eine Bewegung und/oder eine Position des verarbeiteten Materials und/oder das verarbeitete Material selbst und/oder wenigstens eine Verarbeitungsbedingung, insbesondere eine Temperatur, betreffen. Erfassungsmittel können beispielsweise wenigstens einen Sensor umfassen, aber auch steuereinrichtungsintern Informationen abfragen. Wenigstens einer des wenigstens einen Fertigungswertes kann auch ein Betriebsparameter, beispielsweise ein Vorgabeparameter eines aktuellen Rezepts und/oder ein einstellbarer Betriebsparameter sein.

Es ist mithin denkbar, auch sonstige Fertigungswerte der Fertigungsanlage zusätzlich mit in den Überwachungsprozess einzubeziehen. Während grundsätzlich Maßnahmenbedingungen (zusätzlich) denkbar sind, die lediglich wenigstens einen Fertigungswert betreffen und der Überwachung dienen, kann es auch zweckmäßig sein, wenigstens einen Fertigungswert und wenigstens eine Zykluszeit gemeinsam durch eine Maßnahmenbedingung auszuwerten. Ist beispielsweise bekannt, dass für manche Materialien der Schneidprozess länger dauert, kann dies bei der Auswertung der Maßnahmenbedingung über einen bestimmten Fertigungswert abgebildet werden. Auch bekannte Temperaturabhängigkeiten können beispielsweise in Maßnahmenbedingungen abgebildet werden, wenn zusätzlich ein entsprechender Fertigungswert mit eingeht. So erlauben Fertigungswerte eine noch genauere Analyse.

Mit besonderem Vorteil kann in diesem Kontext vorgesehen sein, dass die Erfassung der wenigstens einen Zykluszeit und die wenigstens eine Maßnahmenbedingung auf einen ein Rezept bildenden Satz von für den Fertigungsvorgang festgelegten Betriebsparametern der Fertigungsanlage bezogen sind. Mit anderen Worten kann die Überwachung rezeptspezifisch erfolgen, sodass insbesondere Maßnahmenbedingungen auf Fertigungsvorgänge gemäß einem bestimmten Rezept bezogen sein können. Diese Berücksichtigung von Beschreibungen eines aktuellen Fertigungsvorgangs erlaubt eine nochmals deutlich genauere und robustere Detektion von Abweichungen, also Anomalien, im Fertigungsvorgang. Beispielsweise kann die Steuereinrichtung eine Datenbank aufweisen, in der jedem Rezept zugeordnet abgelegt werden kann, welche Zykluszeiten zu erfassen sind und/oder welche Maßnahmenbedingungen zu verwenden sind und/oder wie diese zu parametrieren sind.

In zweckmäßiger Weiterbildung der vorliegenden Erfindung kann vorgesehen sein, dass das Zykluszeiterfassungsmittel eingerichtet ist, zur Erfassung der Zykluszeit zwei aufeinanderfolgende Steuersignale, insbesondere Bereitschafts- und/oder Triggersignale, der wenigstens einen Einzelschrittkomponente und/oder der Fertigungskomponente abzufragen, und/oder wenigstens eine der wenigstens einen Zykluszeit als Dauer wenigstens eines der Einzelschritte zu ermitteln.

Letzteres bedeutet insbesondere, dass das Zykluszeiterfassungsmittel eingerichtet ist, wenigstens eine Zykluszeit als Zeitraum zwischen zwei aufeinanderfolgenden, wenigstens einen Einzelschritt begrenzenden, unterschiedlichen Steuersignalen, insbesondere Bereitschafts- und/oder Triggersignalen, während eines Einwirkungszyklus zu ermitteln. Es wird mithin vorgeschlagen, für wenigstens einen Teil zu ermittelnder Zykluszeiten ohnehin in der Steuereinrichtung genutzte Bereitschafts- und/oder Triggersignale zu verwenden. Das bedeutet, insoweit kann wenigstens eines des wenigstens einen Zykluszeiterfassungsmittels beispielsweise als Erfassungseinheit der Steuereinrichtung dazu ausgebildet sein, innerhalb der Steuereinrichtung ausgetauschte Steuersignale, insbesondere Bereitschafts- und/oder Triggersignale, zu überwachen und bei Auftreten eines zu protokollierenden Steuersignals den entsprechenden Zeitpunkt zu erfassen, insbesondere zu protokollieren. Durch die Differenz zweier solcher aufeinanderfolgender Zeitpunkte ergibt sich dann eine Zykluszeit, insbesondere als Dauer eines Einzelschritts. Mit anderen Worten und allgemeiner formuliert kann vorgesehen sein, dass Zyklen der Fertigungsanlage, also Standard-Abläufe, als Zeitabschnitte mit einer bei Vorliegen eines Steuersignals protokollierten Startzeit und einer bei Vorliegen eines weiteren Steuersignals protokollierten Endzeit definiert werden. Diese Zeitabschnitte, also Gesamtzyklus-Zykluszeiten, werden dann noch weiter in Einzelschritte unterteilt, die ebenso, bevorzugt ausschließlich, durch das Vorliegen von Steuersignalen definierte, zu protokollierende Startzeiten und Endzeiten aufweisen. Die so erfassten Zykluszeiten werden dann in einer übergeordneten Steuerung ausgewertet. Hierbei kann mit besonderem Vorteil auch die Summe aller Einzelschritt-Zykluszeiten eines Zyklus als eine Gesamtzyklus-Zykluszeit bereitgestellt werden, worauf im Folgenden noch genauer eingegangen werden wird. Durch die Aufteilung in Einzelschritte und das Erfassen, insbesondere Loggen (Protokollieren), von Zykluszeiten für die Einzelschritte wird eine genauere Analyse ermöglicht, wo die Anomalie vorliegt. Zweckmäßigerweise werden die Einzelschritte so definiert, dass sich Abweichungen von einer erwarteten Zykluszeit, insbesondere für ein Rezept, bestimmten Anomalien im Rahmen der Auswertung bereits zuordnen lassen. Wird beispielsweise ein Einzelschritt definiert, in dem das elektronische Bauteil aus einer Blisterpackung gegriffen wird (Pick), um auf der ersten Laminatschicht platziert zu werden, können typische Abweichungen durch schlecht positionierte und/oder nicht oder nicht vollständig geöffnete Blisterpackungen auftreten. Förderstrecken können gegebenenfalls bei längerer Dauer einem schlechten Griff der fördernden Einzelschrittkomponente und/oder zurückrutschendem Material zugeordnet werden und dergleichen. Dabei sei an dieser Stelle noch darauf hingewiesen, dass Einzelschrittkomponenten nicht zwangsläufig einem einzigen Einzelschritt zugeordnet sein können, sondern es durchaus denkbar ist, dass eine Einzelschrittkomponente mehrere Einzelschritte durchführt und/oder an mehreren Einzelschritten beteiligt ist. Ein Beispiel hierfür ist eine Greifereinrichtung, die das Material sowohl für den Schnitt fixieren als auch danach zum Abtransport greifen kann. Ferner sei noch allgemein angemerkt, dass an einem Zyklus einer Fertigungskomponente in manchen Fällen auch Einzelschrittkomponenten anderer Fertigungskomponenten mitwirken können und/oder Steuersignale liefern oder entgegennehmen können. Mithin müssen die Steuersignale nicht zwangsläufig von der zu überwachenden Fertigungskomponente stammen und/oder an diese gerichtet sein.

Vorzugsweise kann mithin bei wenigstens einer auf wenigstens einen Einzelschritt bezogenen Zykluszeit die Überwachungseinheit zur Zuordnung einer Anomalie zu wenigstens einem Einzelschritt eingerichtet sein und/oder wenigstens eine Maßnahmenbedingung zur Anzeige einer wenigstens einem Einzelschritt zuzuordnenden Anomalie bei Erfüllung formuliert sein. Hierbei können jedoch durchaus komplexere Auswertungen und/oder Maßnahmenbedingungen verwendet werden, die beispielsweise auch andere Einzelschritte ihres Zyklus (und/oder eines benachbarten Zyklus) und deren Zykluszeiten berücksichtigen können, da Anomalien in bestimmten Einzelschritten auch Auswirkungen auf die Zykluszeiten anderer Einzelschritte haben können. Maßnahmenbedingungen können wenigstens teilweise gezielt so formuliert werden, dass sie auf die Detektion von Anomalien in bestimmten Einzelschritten und/oder Einzelschrittkomponenten gerichtet sind.

Denkbar ist hierbei mit besonderem Vorteil auch eine Hierarchie der Auswertungsvorgänge und/oder Maßnahmenbedingungen, wobei sich die übergeordneten Auswertungsvorgänge und/oder Maßnahmenbedingungen auf die Gesamtzyklus-Zykluszeit beziehen. So kann beispielsweise vorgesehen sein, dass zunächst eine auf die Gesamtzyklus-Zykluszeit bezogene Maßnahmenbedingung ausgewertet wird, die bei Erfüllung das Vorliegen einer Anomalie anzeigt, wobei bei Erfüllung der Maßnahmenbedingung auf Einzelschritt-Zykluszeiten bezogene untergeordnete Maßnahmenbedingungen ausgewertet werden, um die Anomalie in wenigstens einem Einzelschritt und/oder einer Einzelschrittkomponente - falls möglich - zu lokalisieren. Dabei sei darauf hingewiesen, dass diese Hierarchie auch weiter fortgeführt sein kann, beispielsweise für mehrere aufeinanderfolgende Zyklen, beispielsweise ganze Fertigungskomponenten oder Gruppen von Fertigungskomponenten, Gesamtzeiten ermittelt werden können und ausgewertet werden können. Beispielsweise ist auch eine Gesamtzeit über alle Fertigungskomponenten denkbar und erfassbar, wobei bei einer Anomalie in dieser dann in der Hierarchie schrittweise zu untergeordneten Gesamtzeiten, insbesondere Gesamtzyklus-Zykluszeiten, und sodann zu Einzelschritt-Zykluszeiten übergegangen werden kann.

Beispielhafte Ausführungsformen können vorsehen, dass wenigstens eines des wenigstens einen Bereitschafts- und/oder Triggersignals ein Abschlusssignal von wenigstens einer unterstützenden und/oder positionierenden Einzelschrittkomponente, insbesondere einer Greifereinrichtung und/oder einer Pick-and-Place-Einrichtung und/oder einer Positioniereinrichtung, an eine materialfördernde und/oder materialbearbeitende Einzelschrittkomponente, insbesondere ein Förderband und/oder eine Greifereinrichtung und/oder ein Schneidmittel und/oder ein Material hinzufügendes Mittel, ist und/oder ein Startsignal für eine Einzelschrittkomponente ist. Andere Beispiele für Steuersignale, die erfasst werden können, um Zykluszeiten zu ermitteln, umfassen auch Startsignale der Steuereinrichtung und/oder einer anderen Fertigungskomponente zum grundsätzlichen Start des Zyklus.

In bevorzugter Ausgestaltung kann wenigstens eine der wenigstens einen Maßnahmenbedingung eine Lernwertbedingung sein, die wenigstens eine der wenigstens einen Zykluszeit mit einem zugeordneten oberen Grenzwert und/oder einem zugeordneten unteren Grenzwert vergleicht. Bei dem oberen Grenzwert ist zur Erfüllung der Maßnahmenbedingung eine Überschreitung, bei dem unteren Grenzwert eine Unterschreitung nötig. Hierbei wird mithin überprüft, ob die Zykluszeit innerhalb wenigstens einer erwarteten Grenze liegt. Dabei sind unterschiedliche Herangehensweisen denkbar, um zu den Grenzwerten zu gelangen.

So kann in einer ersten Ausgestaltungsvariante der vorliegenden Erfindung vorgesehen sein, dass wenigstens einer des wenigstens einen Grenzwerts, insbesondere für zumindest ein Rezept, fest vorgegeben ist. In diesem Fall wird also ein Vergleich mit fest hinterlegten Grenzwerten vorgenommen, um Anomalien anzuzeigen. Solche Grenzwerte können beispielsweise anhand von theoretisch beim Entwurf der Fertigungsanlage, insbesondere für das jeweilige Rezept, und/oder bei, insbesondere herstellerseitigen, Testläufen angesetzte oder ermittelte Grenzen sein. Derartige Intervalle, in denen sich die Zykluszeit bewegen soll, sind meist etwas breiter gewählt, da auf lokale und/oder aktuelle Besonderheiten keine Rücksicht genommen werden kann. Sie eignen sich mithin besonders, wenn an der konkreten Fertigungsanlage, beispielsweise für das spezielle Rezept, noch keine Erfahrungswerte vorliegen.

In einer zweiten Ausgestaltungsvariante kann zusätzlich oder alternativ vorgesehen sein, dass die Überwachungseinrichtung eine Ermittlungseinheit zur Ermittlung wenigstens eines gelernten des wenigstens einen Grenzwerts in einer Lernphase des aktuellen und/oder eines zumindest rezeptgleichen Referenz-Fertigungsvorgangs aufweist. Es kann mithin vorgesehen sein, dass der wenigstens eine Grenzwert bei wenigstens einem Fertigungsvorgang an derselben Fertigungsanlage ermittelt, mithin sozusagen angelernt, wird. Konkret kann vorgesehen sein, dass die Lernphase für wenigstens einen gelernten Grenzwert ein gleitendes, mit dem aktuellen Zeitpunkt oder in einem vorgegebenen zeitlichen Abstand vor dem aktuellen Zeitpunkt endendes Zeitfenster ist und/oder die Lernphase für wenigstens einen gelernten Grenzwert ein, insbesondere nach einer Einlaufphase beginnender, Zeitabschnitt zu Beginn des aktuellen Fertigungsvorgangs oder des Referenz-Fertigungsvorgangs und/oder ein, zumindest nach der Einlaufphase, kompletter Referenz-Fertigungsvorgang, insbesondere der erste eines Rezeptes, ist. Beispielsweise kann also beim ersten Durchlauf eines Fertigungsvorgangs für ein Rezept, wenn noch kein oder nur der oben genannte fest vorgegebene Grenzwert vorhanden ist, überwacht werden, in welchem Rahmen sich Zykluszeiten bei einem normal ablaufenden Fertigungsvorgang bewegen. Dabei wird grundsätzlich bevorzugt eine Einlaufphase abgewartet, beispielsweise eine bestimmte Zyklenzahl, insbesondere 5 bis 30, in der, insbesondere durch einen Benutzer überwacht, die Fertigungsanlage durchgängig laufen muss, ehe der stabile, normale Fertigungszustand erreicht ist und zum Anlernen von Grenzwerten genutzt werden kann. Eine solche Einlaufphase kann grundsätzlich auch vor Beginn der Überwachung angesetzt werden. Zweckmäßigerweise können die Grenzwerte jedoch immer weiter aktualisiert werden, so lange die Fertigungsanlage stabil läuft. Auf diese Weise können auch, beispielsweise benutzerseitig herbeigeführte, Verbesserungen, Nachjustierungen und dergleichen berücksichtigt werden. Nichtsdestotrotz sollte dann zweckmäßigerweise ein gewisser zeitlicher Abstand zu dem aktuellen Zeitpunkt eingehalten werden, da sich manche Anomalien langsam ausbilden können und daher ggf. "mitgelernt" werden könnten, was durch den zeitlichen Abstand vermieden werden kann. Beispielsweise kann die Lernphase immer bis zum Ende des letzten erfolgreich abgeschlossenen Fertigungsvorgangs zurückreichen. Mit besonderem Vorteil werden auch in der Lernphase die Zykluszeiten zweckmäßig gemeinsam mit wenigstens einem, insbesondere dem wenigstens einen, weiteren Fertigungswert erfasst, um sie in Zusammenhang mit den Fertigungsbedingungen und sonstigen Umständen setzen zu können. Anders gesprochen werden die Zykluszeiten bevorzugt, insbesondere auch während der Überwachung, in Verbindung mit allen Bewegungen und Sensorabfragen an der Fertigungsanlage erfasst. So können, insbesondere, wenn die Maßnahmenbedingungen auch Fertigungswerte abfragen, nochmals verbesserte und genauere Auswertungen vorgenommen werden. Doch auch allgemein wird bereits durch Lernen aus vorangehenden Fertigungsabschnitten, insbesondere desselben Rezepts, eine deutliche Verbesserung der Überwachung erzielt, da konkret auf den Normalzustand an einer bestimmten Fertigungsanlage abgestellt werden kann.

Während einer Lernphase kann durchaus auch eine Überwachung vorgesehen sein, das bedeutet, während der wenigstens eine gelernte Grenzwert ermittelt wird, können beispielsweise aktuell erfasste Zykluszeiten auch hinsichtlich der vorgegebenen Grenzwerte gemäß der ersten Ausgestaltungsvariante und/oder anderweitig bereitgestellter Maßnahmenbedingungen überwacht werden. Beispielsweise ist es denkbar, bei einem neuen Rezept, für das der wenigstens eine Grenzwert angelernt werden soll, Maßnahmenbedingungen eines ähnlichen Rezepts, insbesondere des ähnlichsten Rezepts, wofür eine Vergleichshierarchie definiert werden kann, heranzuziehen. Unterscheidet sich beispielsweise die gewünschte Breite und/oder Länge des herzustellenden Laminatbauteils lediglich marginal von der des aktuellen Rezepts, kann eine hohe Ähnlichkeit angenommen werden. Maßnahmenbedingungen ähnlicher Rezepte können gegebenenfalls modifiziert werden, beispielsweise in Abhängigkeit eines Ähnlichkeitsmaßes mit abnehmender Ähnlichkeit abgeschwächt werden. Es versteht sich, dass dann, wenn, beispielsweise aufgrund der Verwendung eines gleitenden Zeitfensters, eine Aktualisierung von Grenzwerten stattfindet, selbstverständlich grundsätzlich die bisherigen Grenzwerte zur Überwachung eingesetzt werden.

Es sei noch angemerkt, dass es grundsätzlich vorteilhaft ist, einen Verlauf der Zykluszeiten über ein Auswertungszeitfenster zu analysieren. Beispielsweise kann eine Drift von Zykluszeiten über die Zeit auch auf eine Anomalie hinweisen. Ein Trend, der sich über ein Auswertungszeitfenster ergibt, kann einen zunehmenden Verschleiß oder dergleichen andeuten. Entsprechend können Maßnahmenbedingungen und ggf. weitere Auswertungsvorgänge ausgestaltet sein, nicht nur den aktuellen Wert der Zykluszeit auszuwerten, sondern den Verlauf über ein Auswertungszeitfenster, welches auch von Maßnahmenbedingung zu Maßnahmenbedingung unterschiedlich sein kann.

Allgemein gesprochen können die aufgezeichneten Zykluszeiten auch über die Detektion von aktuell vorliegenden Anomalien hinaus nützlich ausgewertet werden. So kann eine bevorzugte Ausgestaltung der vorliegenden Erfindung vorsehen, dass die Überwachungseinrichtung ferner eine Auswertungseinheit aufweist, die zur Auswertung von über zumindest einen Zeitraum in einem Speichermittel der Überwachungseinrichtung gespeicherten, erfassten Zykluszeiten, insbesondere deren Verlauf, zur Ermittlung optimierter Betriebsparameter der Fertigungsanlage und/oder zur Terminierung einer vorausschauenden Wartung eingerichtet ist. Das bedeutet, die Auswertung der Zykluszeiten, insbesondere gemeinsam mit wenigstens einem Fertigungswert, kann auch dazu genutzt werden, den Fertigungsvorgang zu verbessern, insbesondere zu optimieren, nachdem Zykluszeiten neben Anomalien auch Verbesserungspotenzial beschreiben können. Zudem können die Zykluszeiten, insbesondere Trends in ihrem zeitlichen Verlauf, auch dahingehend ausgewertet werden, wann in der Zukunft eine Wartung zweckmäßig sein könnte, die dann frühzeitig angesetzt werden kann, ohne dass es gegebenenfalls zu einem (nicht geplanten) Ausfall der Fertigungsanlage kommt. Insgesamt werden die Zykluszeiten auf diese Weise auch weiteren Zwecken zugeführt, mithin mehrfach vorteilbringend genutzt. Beispielsweise können in der Auswertungseinheit, vergleichbar mit den Maßnahmenbedingungen für Anomalien, Optimierungsbedingungen und/oder Wartungsbedingungen verwendet werden, denen entsprechende Optimierungs- und/oder Ausgabemaßnahmen zur Anpassung von (einstellbaren) Betriebsparametern und/oder zum Hinweis auf eine zu terminierende Wartung zugeordnet sein können.

In einer Weiterbildung kann die Fertigungsanlage ferner eine Anzeigeeinrichtung, insbesondere als Teil der Bedieneinrichtung, umfassen und die Steuereinrichtung zur wenigstens teilweisen Ausgabe der wenigstens einen Zykluszeit und/oder einer daraus abgeleiteten Information an der Anzeigeeinrichtung eingerichtet sein, insbesondere innerhalb einer Benutzeroberfläche zur Bedienung und Überwachung der Fertigungsanlage. Konkret kann beispielsweise vorgesehen sein, dass die Ausgabe eine Anzeige der aktuellen Zykluszeit mit wenigstens einem Vergleichswert, insbesondere dem oberen und/oder dem unteren Grenzwert, umfasst. Ferner kann die Anzeige auch einen Verlauf der Zykluszeiten, insbesondere auch über mehrere Fertigungsvorgänge als jeweiliger Mittelwert, umfassen. Auf diese Weise kann auch ein Benutzer die Zykluszeiten beobachten, überwachen und Schlussfolgerungen ziehen, die gegebenenfalls nicht oder noch nicht durch Maßnahmenbedingungen und/oder die weitere Auswertung, beispielsweise zur Optimierung, abgedeckt sind. Zudem erhält er ständig einen Überblick über die Fertigungsanlage und inwieweit der Fertigungsvorgang innerhalb normaler Parameter verläuft.

Wie für gattungsgemäße Fertigungsanlagen für Laminatbauteile grundsätzlich bekannt, kann auch die erfindungsgemäße Fertigungsanlage bevorzugt vorsehen, dass die Fertigungskomponenten
- eine erste Zuführeinrichtung zum Zuführen einer unteren, bandförmigen ersten Laminatschicht und ein die erste Laminatschicht aufnehmendes Transportmittel,
- eine Auflegeeinrichtung, insbesondere eine Pick-and-Place-Einrichtung, zum Auflegen einzelner Bauteile auf die mittels des Transportmittels in einer Förderrichtung bewegte, erste Laminatschicht in definierten Abständen,
- eine zweite Zuführeinrichtung zum Zuführen einer oberen, bandförmigen zweiten Laminatschicht und Auflegen der zweiten Laminatschicht auf die erste Laminatschicht unter Einbettung der Bauteile zur Bildung eines Laminatbands,
- eine Schneideinrichtung, umfassend wenigstens ein bewegbares Schneidmesser zum Abschneiden einzelner streifenförmigen Laminatbauteile von dem mittels des Transportmittels geförderten Laminatband, und
- eine Greifereinrichtung zum Aufnehmen und Abtransportieren der einzelnen Laminatbauteile
   umfassen.

Beispielsweise kann konkret, wie in der eingangs genannten DE 10 2022 124 337 A1 beschrieben, vorgesehen sein, dass die Greifereinrichtung zum Greifen des vorderen Endes des Laminatbands im Bereich eines Bauteils ausgebildet ist und synchron mit dem getaktet bewegbaren Transportmittel um ein vorgegebenes Streckenmaß zum Bewegen des Laminatbands durch die Schneideinrichtung und Positionieren des Laminatbands relativ zum Schneidmesser bewegbar ist. Wird hierbei mittels einer der Schneideinrichtung nachgeschalteten Messeinrichtung die Ist-Lage des Bauteils im Laminatbauteil bezogen auf die Förderrichtung erfasst und bei Erfassung einer Abweichung der Ist-Lage von einer definierten Soll-Lage die synchrone Bewegung des Transportmittels und der Greifereinrichtung in Abhängigkeit der erfassten Abweichung gesteuert, kann vorgesehen sein, dass diese erfasste Abweichung auch bei der Auswertung der Zykluszeiten berücksichtigt wird, insbesondere dann, wenn bei der Steuerung in Abhängigkeit der erfassten Abweichung Sollwerte, insbesondere das erwartete Intervall, für Zykluszeiten variieren können. Anders gesprochen kann wenigstens einer des wenigstens einen Grenzwerts in Abhängigkeit der Abweichung angepasst werden.

Ein derartiges Zusammenspiel mit Regelungsmechanismen kann auch im Allgemeinen vorgesehen sein, soweit die Kompensation von Regelabweichungen Einfluss auf erwartete Zykluszeiten haben kann. So kann beispielsweise vorgesehen sein, dass wenigstens eine der wenigstens einen Maßnahmenbedingung in Abhängigkeit einer Regelungsabweichung wenigstens eines Regelkreises der Fertigungsanlage angepasst wird. Die Art der Anpassung, beispielsweise des oberen und des unteren Grenzwerts, kann beispielsweise empirisch festgestellt werden, indem beispielsweise in der Lernphase die Zykluszeiten bei Regelabweichungen diesen zugeordnet erfasst und ausgewertet werden.

Zurückkehrend zur konkreten Ausgestaltung der Fertigungsanlage kann diese selbstverständlich auch weitere, optionale Fertigungskomponenten umfassen. Besonders zweckmäßig kann vorgesehen sein, dass als Fertigungskomponente eine Prüfeinrichtung zur Prüfung der Funktionsfähigkeit des elektronischen Bauteils des Laminatbauteils geprüft wird.

Als besonders vorteilhaft hat es sich erwiesen, wenn wenigstens die Auflegeeinrichtung und/oder das Transportmittel und/oder die Schneideinrichtung und/oder die Greifereinrichtung eine zu überwachende Fertigungskomponente ist. Dabei können beispielsweise die Auflegeinrichtung und das Transportmittel und/oder die Schneideinrichtung und die Greifereinrichtung auch Teil jeweils wenigstens einer zu überwachenden Gruppe von Fertigungskomponenten bilden, da sie eng zusammenarbeiten. Beispielsweise bei der Auflegeeinrichtung und dem Transportmittel folgen mehrere Einzelschritte aufeinander, die jeweils Bereitschaften bzw. sonstige Triggersignale nutzen können und an vielerlei Stellen auf konkrete Anomalien hinweisen können, wenn die Einzelschritte des Zyklus, den die Gruppe durchläuft, allesamt durch Zykluszeiten entsprechend überwacht werden. Ein ähnliches Zusammenspiel ergibt sich bei der Greifereinrichtung und der Schneideinrichtung. Auch Synchronität und deren Aufrechterhaltung können durch Zusammenschau von Zykluszeiten innerhalb einer solchen Gruppe überprüft werden. Beispielhaft für die Auflegeeinrichtung, ausgebildet als Pick-and-Place-Einrichtung, können folgende Zeitstempel erfasst werden, die eine Startzeit bzw. Endzeit von Einzelschritten beschreiben können. In einem Beispiel kann zunächst bei einer Auflegeeinrichtung ein Bereitschaftssignal erfasst werden, das anzeigt, dass das letzte Bauteil platziert wurde und ein Aufnehmer der Auflegeeinrichtung in einer angehobenen ("up") Bereitschaftsposition ist. Ein Feeder bewegt dann das Bauteil, beispielsweise einen Chip, in eine Entnahmeposition. Der Abschluss dieses Einzelschritts, wonach das elektronische Bauteil zum Aufgreifen ("pick") bereit ist, wird als Endzeit dieses ersten Einzelschritts erfasst, die auch die Startzeit für den zweiten Einzelschritt ist, denn die Auflegeeinrichtung wird nun getriggert, den Aufnehmer über die Entnahmeposition zu bewegen. Ist diese erreicht, wird auch dies als Zeitpunkt protokolliert. Dann erfolgt der dritte Einzelschritt des Absenkens des Aufnehmers bis zur Aufgreifbereitschaft in eine abgesenkte ("down") Position. Auch deren Erreichen wird protokolliert. Im vierten Einzelschritt wird das elektronische Bauteil an der Entnahmeposition, beispielsweise aus einem Blister, aufgenommen und der Aufnehmer fährt wieder in die angehobene Position. Auch für diesen vierten Einzelschritt wird die Endzeit erfasst. Sodann, in einem fünften Einzelschritt, fährt das Transportmittel bzw. eine entsprechende Einzelschrittkomponente des Transportmittels die untere Laminatschicht in eine Auflegeposition. Ist diese erreicht, wird ein Bereitschaftssignal ausgegeben, das protokolliert wird und wiederum auch als Triggersignal für die Auflegeeinrichtung dient, die als sechsten Einzelschritt den Aufnehmer über die Auflegeposition bewegt. Das Erreichen dieser Position wird als Endzeit des sechsten Einzelschrittes und als Startzeit des siebten Einzelschrittes protokolliert, in welchem der Aufnehmer abgesenkt wird und das Bauteil an der Auflegeposition auf der unteren Laminatschicht ablegt ("place"). Der Abschluss dieses Vorgangs wird über ein entsprechendes Abschlusssignal wiederum erfasst, wonach in dem abschließenden achten Einzelschritt der Aufnehmer in die angehobene Bereitschaftsposition zurückfährt. Es ist nun wieder das initiale Bereitschaftssignal erreicht und der nächste Zyklus kann beginnen. Diese Aufteilung in Einzelschritte ist beispielhaft, da auch feinere und gröbere Aufteilungen zweckmäßig sein können.

Alle diese Steuersignale, die Trigger, einen Abschluss bzw. eine Bereitschaft und dergleichen anzeigen, können durch das Zykluszeiterfassungsmittel, beispielsweise eine Erfassungseinheit der Steuereinrichtung, erfasst werden, wobei der entsprechende Zeitstempel, welcher eine Startzeit bzw. Endzeit eines Einzelschritts beschreibt, protokolliert wird (Zeitstempel). Anhand der Differenzen ergeben sich die Zykluszeiten, wobei sich die Gesamtzyklus-Zykluszeit auch als Differenz der ersten Startzeit bis zur letzten Endzeit ergibt. Beispielhafte Anomalien, die durch diese Zykluszeiten, gegebenenfalls gemeinsam mit wenigstens einem Fertigungswert, anhand von Maßnahmenbedingungen detektiert werden können, umfassen
- inkorrekte Bereitstellung durch den Feeder, beispielsweise leere Blisterpackung oder verdrehtes Bauteil
- Aufnehmer verliert das Bauteil
   . Bauteil-Plazierung auf der unteren Laminatschicht nicht korrekt
- Verschleiß der Achsen des Aufnehmers
- notwendige Korrektur zur Einstellung des Aufnehmers
- Zuführung der ersten Laminatschicht nicht korrekt
- Material rutscht zurück
- Verschleiß an dem Fördermittel
- Benutzereingabefehler bei Betriebsparametern wie Bewegungsparametern, beispielsweise Geschwindigkeiten der Auflegeeinrichtung und/oder des Feeders und/oder der ersten Zuführeinrichtung und/oder der Transporteinrichtung, und/oder Eigenschaften, beispielsweise Dimensionen, des zu greifenden elektronischen Bauteils,
- Aufgreifsystem der Auflegeeinrichtung ist verschmutzt.

Selbstverständlich sind auch weitere Möglichkeiten denkbar. Die dem Verschleiß betreffenden Erkenntnisse können auch in der Auswertungseinheit hinsichtlich einer Wartung bearbeitet und/oder gewonnen werden, beispielsweise durch die Wartungsbedingung.

Die Zykluszeiten-Analyse ist nicht auf eine Fertigungskomponente beschränkt. Beispielsweise ist es, wie bereits angedeutet, besonders vorteilhaft, wenn parallel zur Greifereinrichtung auch Zykluszeiten der Schneideinrichtung erfasst werden, wobei wenigstens eine Maßnahmenbedingung jeweils wenigstens eine Zykluszeit der Greifereinrichtung und der Schneideinrichtung gemeinsam ausgewertet, um eine bestimmte Anomalie festzustellen und/oder wenigstens eine Zykluszeit der Schneideinrichtung anhand wenigstens eines auch zur Ermittlung einer Zykluszeit der Greifereinrichtung verwendeten Steuersignals ermittelt wird. Für die Schneideinrichtung können einige Steuersignale, die hinsichtlich der Greifereinrichtung zur Definition von Einzelschritten und zugehörigen Zykluszeiten herangezogen worden, ebenso verwendet werden. Auch bei der optionalen Prüfungseinrichtung können verschiedene Zykluszeiten geloggt werden, beispielsweise die Ankunft des Materials, das Nutzen von Sensorik und Prüfgeräten und dergleichen. Es sei noch angemerkt, dass, auch wenn der Zyklus insgesamt eine Einwirkung auf das Material, also Band, betrifft, nicht jeder Einzelschritt unmittelbar auf das Material einwirken muss. Allgemein bieten sich folgende Vorgänge an, um Zykluszeiten zu erfassen:
- Streifenabwicklung (Materialzuführung der oberen und unteren Laminatschicht)
- Bereitstellung des Bauteils durch den Feeder
- Transportvorgänge
- Vereinzelung an der Schneideinrichtung
- Handhabung des fertigen Laminatbauteils (Greifen, Hubeinrichtung, Drehen etc.)
- Kontrolle des fertigen Laminatbauteils (Qualitätsprüfung, Überprüfung mit Kamera und Lesegerät)
- Aufwicklung der fertigen Laminatbauteile.

In diesen weiteren Vorgängen lassen sich dabei beispielsweise auch folgende weitere Fehlerfälle anhand der Zykluszeiten erkennen:
- Probleme in der Streifenzuführung (Materialstau, Materialabriss und dergleichen)
- Fehler in der Bauteilüberwachung bzw. Bauteilüberprüfung (z.B. ist das elektronische Bauteil vorhanden, ist es funktionsfähig)
- Materialschrumpfung an der Schneideinrichtung (Auswirkung auf Taktung)
- fehlerhafte Lagen an der Schneidposition und/oder an anderen Positionen, insbesondere Übergabepunkten,
- Fehler bei der Übergabe zwischen Fertigungskomponenten und/oder Einzelschrittkomponenten (Überprüfung des Zusammenwirkens).

Neben der Fertigungsanlage betrifft die vorliegende Erfindung auch ein computerimplementiertes Verfahren zur Überwachung des Betriebs einer Fertigungsanlage für die Herstellung vereinzelter streifenförmiger Laminatbauteile enthaltend ein zwischen zwei Laminatschichten aus einem bandförmigen Material eingebettetes elektronisches Bauteil, wobei die Fertigungsanlage mehrere materialbearbeitende und/oder materialfördernde, in Abhängigkeit von Betriebsparametern ansteuerbare Fertigungskomponenten, eine Steuereinrichtung zur Ansteuerung der Fertigungskomponenten und eine Bedieneinrichtung aufweist, wobei die Steuereinrichtung eine Überwachungseinrichtung zur Überwachung des Betriebs wenigstens einer zu überwachenden der Fertigungskomponenten aufweist, welche wenigstens eine Einzelschrittkomponente zur Ausführung von Einzelschritten eines Zyklus zur Einwirkung auf das Material umfasst. Erfindungsgemäß weist das Verfahren folgende Schritte während eines Fertigungsvorgangs auf:
- Erfassung einer Zykluszeit des Zyklus an der wenigstens einen zu überwachenden Fertigungskomponente durch wenigstens ein Zykluszeiterfassungsmittel,
- Auswertung von von dem Zykluszeiterfassungsmittel erfassten Zykluszeiten hinsichtlich der Erfüllung wenigstens einer Maßnahmenbedingung, die das Vorliegen einer Anomalie im Fertigungsvorgang anzeigt, und
- Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

Sämtliche Ausführungen bezüglich der erfindungsgemäßen Fertigungsanlage lassen sich analog auf das erfindungsgemäße Verfahren übertragen und umgekehrt, sodass auch mit dem Verfahren die bereits genannten Vorteile erhalten werden können.

Ein erfindungsgemäßes Computerprogramm ist direkt in ein Speichermittel einer Steuereinrichtung einer Fertigungsanlage für die Herstellung vereinzelter streifenförmiger Laminatbauteile enthaltend ein zwischen zwei Laminatschichten aus einem bandförmigen Material eingebettetes elektronisches Bauteil ladbar und weist Programmmittel derart auf, dass bei Ausführen des Computerprogramms auf der Steuereinrichtung diese veranlasst wird, die Schritte eines erfindungsgemäßen Verfahrens durchzuführen. Das Computerprogramm kann auf einem erfindungsgemäßen elektronisch lesbaren Datenträger gespeichert sein, welcher mithin darauf gespeicherte Steuerinformationen umfasst, die wenigstens ein erfindungsgemäßes Computerprogramm umfassen und derart ausgestaltet sind, dass bei Verwendung des Datenträgers in einer Steuereinrichtung einer Fertigungsanlage für die Herstellung vereinzelter streifenförmiger Laminatbauteile enthaltend ein zwischen zwei Laminatschichten aus einem bandförmigen Material eingebettetes elektronisches Bauteil diese zur Durchführung eines erfindungsgemäßen Verfahrens ausgebildet wird. Bei dem Datenträger kann es sich um einen nicht-transienten Datenträger, beispielsweise eine CD-ROM, handeln.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine prinzipielle Seitenansicht von Fertigungskomponenten eines Ausführungsbeispiels einer erfindungsgemäßen Fertigungsanlage für die Herstellung vereinzelter streifenförmiger Laminatbauteile enthaltend ein zwischen zwei Laminatschichten aus einem bandförmigen Material eingebettetes elektronisches Bauteil,
- Fig. 2: die Fertigungsanlage aus Fig. 1 in einer Aufsicht,
- Fig. 3: eine perspektivische Teilansicht der Fertigungsanlage unter Darstellung der Auflegeeinrichtung nebst zugeordnetem Transportmittel und der zweiten Zuführeinrichtung,
- Fig. 4: eine Teilansicht der Fertigungsanlage aus Fig. 1 unter Darstellung der Schneideinrichtung sowie der Greifereinrichtung,
- Fig. 5: Steuer- und Bedienkomponenten der Fertigungsanlage,
- Fig. 6: einen Ablaufplan eines Ausführungsbeispiels des erfindungsgemäßen Verfahrens,
- Fig. 7: schematisch eine erste Zustandsskizze zur Erläuterung des Verfahrens,
- Fig. 8: schematisch eine zweite Zustandsskizze zur Erläuterung des Verfahrens,
- Fig. 9: schematisch eine dritte Zustandsskizze zur Erläuterung des Verfahrens,
- Fig. 10: schematisch eine vierte Zustandsskizze zur Erläuterung des Verfahrens,
- Fig. 11: schematisch eine fünfte Zustandsskizze zur Erläuterung des Verfahrens,
- Fig. 12: schematisch eine sechste Zustandsskizze zur Erläuterung des Verfahrens,
- Fig. 13: schematisch eine siebte Zustandsskizze zur Erläuterung des Verfahrens,
- Fig. 14: schematisch eine achte Zustandsskizze zur Erläuterung des Verfahrens, und
- Fig. 15: eine mögliche Anzeige in der Benutzeroberfläche.

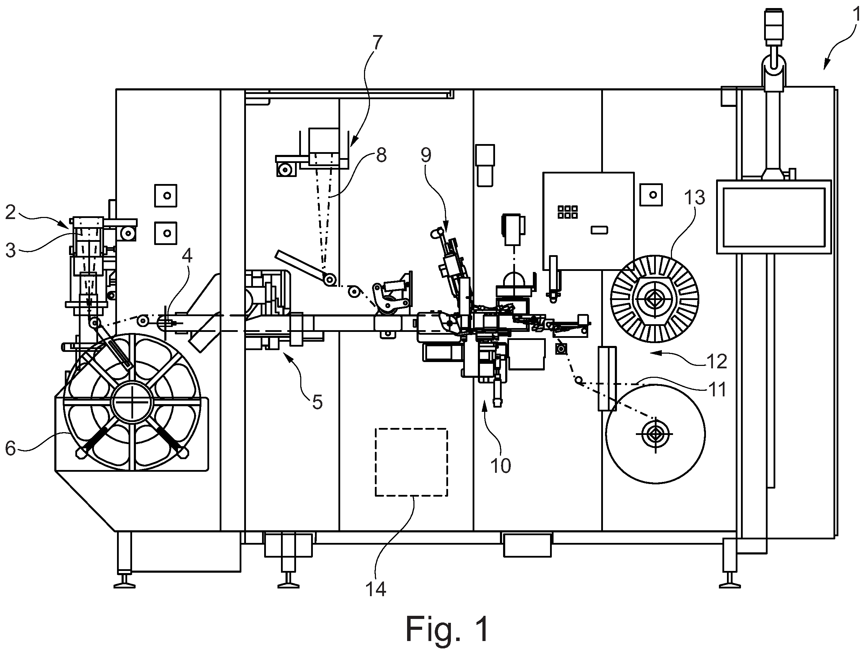

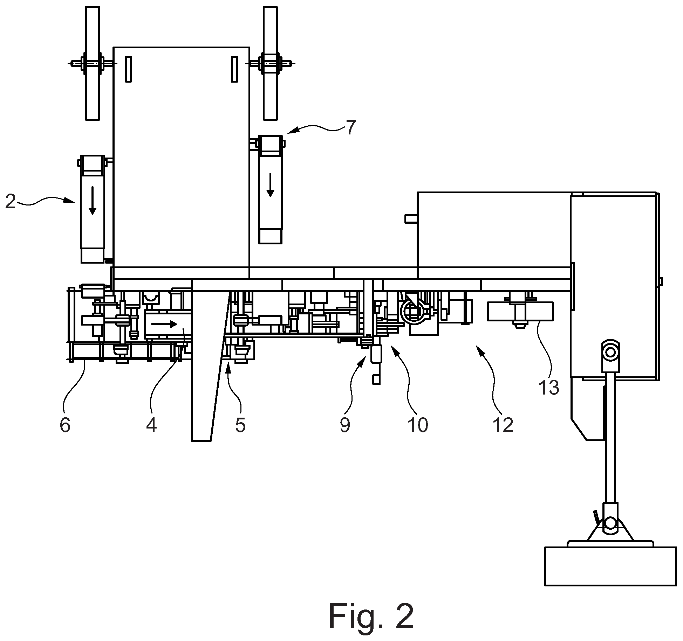

Fig. 1 zeigt eine erfindungsgemäße Fertigungsanlage 1 zur Herstellung einzelner streifenförmiger Laminatbauteile, die aus zwei aufeinander laminierten Laminatschichten aus einem klebrigen Material bestehen, zwischen welche Laminatschichten ein elektronisches Bauteil, vorliegend ein RFID-Chip, eingebettet ist. Die Fertigungsanlage 1 umfasst eine erste Zuführeinrichtung 2 zum Zuführen einer unteren, bandförmigen ersten Laminatschicht 3 sowie ein Transportmittel 4, z.B. ein Transportband oder Transportriemen, auf das die untere erste Laminatschicht 3 aufgelegt wird. Wie Fig. 2 zeigt, ist die erste Zuführeinrichtung 2 seitlich zum Transportmittel 4 angeordnet, das heißt, dass die erste Laminatschicht 3 unter einem Winkel von 90° zugeführt und anschließend umgelenkt und auf das Transportmittel 4 gelegt wird.

Weiterhin vorgesehen ist eine Auflegeeinrichtung 5 zum Auflegen der einzelnen, einzubettenden, elektronischen Bauteile auf die erste Laminatschicht 3, wobei die einzelnen Bauteile, vorliegend also die RFID-Chips, von einer Vorratsrolle 6 über ein Zuführband (Feeder) zugeführt werden und anschließend über die Auflegeeinrichtung 5, eine Pick-and-Place-Einrichtung, gegriffen und definiert aufgelegt werden.

Weiterhin vorgesehen ist eine zweite Zuführeinrichtung 7 zum Zuführen einer oberen, bandförmigen zweiten Laminatschicht 8, die, siehe Fig. 2, ebenfalls seitlich versetzt zum Transportmittel 4 ist, so dass auch die zweite Laminatschicht 8 unter einem Winkel von 90° zugeführt und anschließend umgelenkt wird. Die zweite Laminatschicht 8 wird auf die erste Laminatschicht 3 aufgelegt, die bereits mit den Bauteilen bestückt ist, so dass sich ein Laminatband ausbildet, bestehend aus den fest verbundenen beiden Laminatschichten 3, 8 und den eingebetteten Bauteilen.

Weiterhin vorgesehen ist eine Schneideinrichtung 9 umfassend wenigstens ein bewegbares Schneidmesser zum Abschneiden einzelner streifenförmiger Laminatbauteile von dem mittels des Transportmittels 4 zugeführten Laminatband. Der Schneideinrichtung 9 nachgeschaltet ist eine Greifereinrichtung 10 zum Aufnehmen und Abtransportieren der einzelnen Laminatbauteile, die schlussendlich auf ein Aufwickelband 11 einer Aufwickelvorrichtung 12 aufgelegt werden, welches Aufwickelband 11 sodann auf eine Rolle 13 aufgewickelt wird.

Gezeigt ist ferner dem Grunde nach eine Steuereinrichtung 14, die die wesentlichen Komponenten der Fertigungsanlage 1 steuert, worauf nachfolgend noch im Detail eingegangen wird.

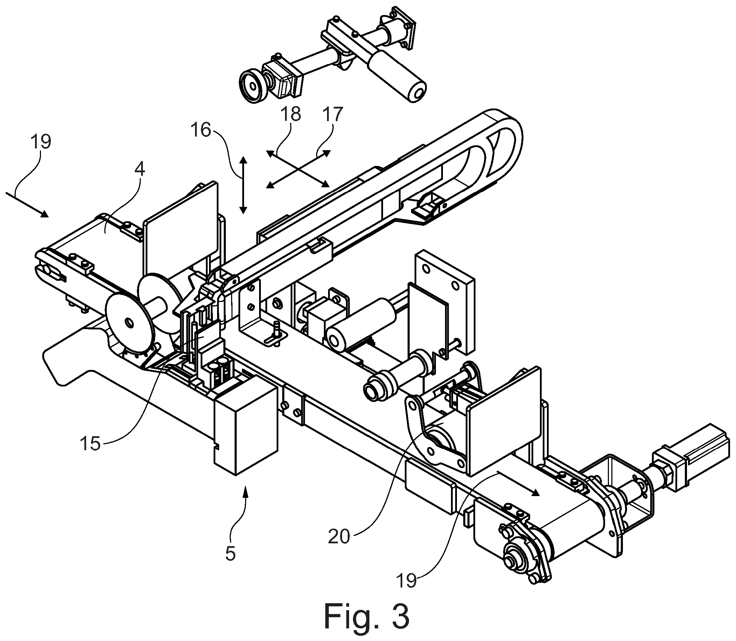

Fig. 3 zeigt in einer Perspektivansicht den Auflege- und Laminierbereich der Fertigungsanlage 1. Gezeigt ist das Transportmittel 4, auf das die untere erste Laminatschicht 3 aufgelegt wird. Ebenfalls gezeigt ist die Auflegeeinrichtung 5, die einen geeigneten Aufnehmer 15 aufweist, der, wie durch den Pfeil 16 dargestellt ist, einerseits vertikal bewegbar ist, andererseits auch, wie durch den Pfeil 17 dargestellt, horizontal bewegbar ist, nachdem die Bauteilzuführung seitlich des Transportmittels 4 stattfindet und über den Aufnehmer 15 das Bauteil gegriffen, angehoben und über das Transportmittel 4 bewegt und dort wieder abgesenkt werden muss. Durch die Bewegbarkeit der Auflegeeinrichtung 5 bzw. deren Aufnehmers 15 in Richtung des Pfeils 17, also quer zur Transportrichtung, ist eine Quer- oder Seitenkorrektur der Auflegeposition des Bauteils auf die untere erste Laminatschicht 3 möglich. Wie durch den Pfeil 18 dargestellt, ist der Aufnehmer 15 der Auflegeeinrichtung 5 selbst auch in Förderrichtung des Transportmittels 4, welche Förderrichtung über den Pfeil 19 dargestellt ist, beweglich, um hierüber eine in Förderrichtung erfolgende Korrektur des Auflegeabstands vornehmen zu können.

Weiterhin gezeigt ist unter anderem die eigentliche Laminierrolle 20, die oberhalb des Transportmittels 4 angeordnet ist, und unterhalb welcher auch die obere zweite Laminierschicht zugeführt wird, die dann mittels der Laminierrolle 20 auf die untere erste Laminierschicht 3 auflaminiert wird.

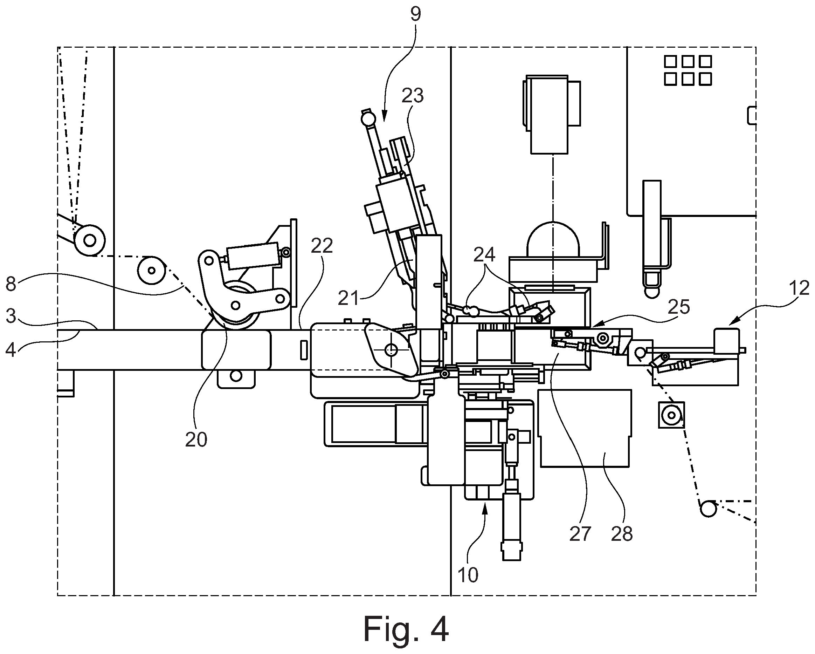

Fig. 4 zeigt in einer Detailansicht einen weiteren Bereich der Vorrichtung 1, nämlich den Bereich der Vereinzelung. Gezeigt ist wiederum das Transportmittel 4 sowie hier angedeutet die darauf liegende, mit Bauteilen belegte erste Laminierschicht 3. Ebenfalls angedeutet ist die zweite obere Laminierschicht 8, die über die Laminierrolle 20 auflaminiert wird.

Dem Transportmittel 4 nachgeschaltet ist wie beschrieben die Schneideinrichtung 9 umfassend ein linear bewegliches Schneidmesser 21, das quer zur Förderrichtung 19 verläuft und das Laminatband 22 zur Bildung der einzelnen Laminatbauteile schneidet. Der Hubbetrieb des Schneidmessers 21 wird über eine geeignete Hubeinrichtung 23 wie einen Pneumatikzylinder oder einen Elektromotor gesteuert, über die das Schneidmesser 21 exakt zum geforderten Zeitpunkt abfährt, um den Schnitt vorzunehmen.

Der Schneideinrichtung 9 nachgeschaltet ist wie beschrieben eine Greifereinrichtung 10, vorliegend umfassend zwei separate Greifer 24. Jeder Greifer 24 ist dazu ausgerüstet, ein geschnittenes Laminatbauteil aufzunehmen, anzuheben und abzutransportieren und auf eine Übergabeeinrichtung 25 zu übergeben, von der ein zuvor vermessenes und geprüftes Laminatbauteil an die Aufwickeleinrichtung 12 übergeben oder ausgesondert wird.

Weiterhin gezeigt ist eine optional vorzusehende Prüfeinrichtung 27, die im Bereich der Übergabe eines Laminatbauteils von einem Greifer 24 an die Übergabeeinrichtung 25 positioniert ist. Über diese Prüfeinrichtung kann die ordnungsgemäße Funktion des einlaminierten Bauteils, also des RFID-Chips, überprüft werden, wobei eine Übergabe eines solchen Laminatbauteils an die Aufwickeleinrichtung 12 nur erfolgt, wenn das Bauteil auch ordnungsgemäß arbeitet. Ansonsten erfolgt der Ausschluss des Laminatbauteils durch Übergabe in ein Sammelbehältnis 28. Bei der Prüfeinrichtung 27 kann es sich um eine entsprechende Lese- oder Sendeeinrichtung handeln, die beispielsweise in eine kontaktlose Kommunikation mit dem RFID-Chip tritt, um dessen Antwortsignale auszulesen oder seinen Identifikationscode etc., wobei die entsprechenden Informationen der Steuereinrichtung 14 gegeben und dort auch abgespeichert werden können.

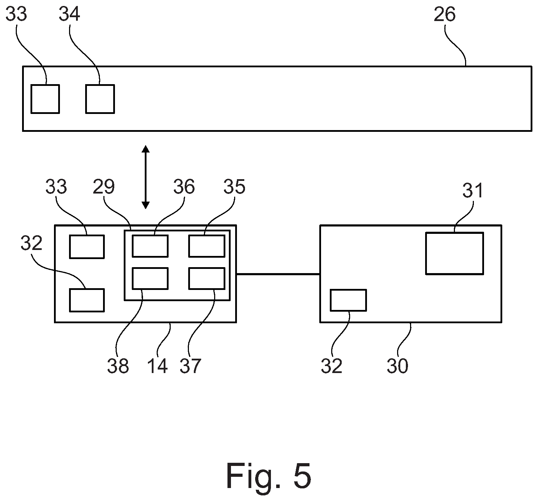

Fig. 5 zeigt schematisch die Steuerungs-, Bedien- und Überwachungsstruktur der Fertigungsanlage 1. Neben der Anordnung 26 von Fertigungskomponenten weist die Fertigungsanlage 1 die Steuereinrichtung 14 auf, die vorliegend eine Überwachungseinrichtung 29 sowie gegebenenfalls weitere Komponenten umfasst. Über die Steuereinrichtung 14 kann der Betrieb der Fertigungskomponenten der Anordnung 26 gesteuert werden. Die Steuereinrichtung 14 ist auch mit einer Bedieneinrichtung 30 verbunden, über die Benutzereingaben eines Benutzers/einer Bedienperson entgegengenommen werden können. Die Bedieneinrichtung 30 weist auch eine Anzeigeeinrichtung 31, vorliegend ein Display bzw. einen Bildschirm, auf. Es sei angemerkt, dass eine Benutzeroberfläche auch über einen Internetzugang oder dergleichen bereitgestellt werden kann. Die Steuereinrichtung 14 und die Bedieneinrichtung 30 können wenigstens teilweise integriert ausgeführt sein, das bedeutet, Komponenten der Steuereinrichtung 14 können in Baueinheiten bzw. Baugruppen der Bedieneinrichtung 30 verbaut sein und umgekehrt.

Die Steuereinrichtung 14 und/oder die Bedieneinrichtung 30 umfasst darüber hinaus ein Speichermittel 32, in dem neben anderen Informationen vorliegend auch Betriebsparameter (bzw. konkret deren Werte), Zykluszeiten und Fertigungswerte (die wenigstens teilweise Werten von Betriebsparametern entsprechen können) sowie Maßnahmenbedingungen gespeichert werden können. Hierzu ist zunächst anzumerken, dass einem Fertigungsvorgang zur Herstellung eines bestimmten Fertigungsprodukts üblicherweise ein sogenanntes Rezept zugrundeliegt, welches Vorgabeparameter, die das Fertigungsprodukt beschreiben (beispielsweise eine Breite des Laminatbauteils, eine generelle Materialangabe und/oder eine Art des elektronischen Bauteils) sowie gegebenenfalls weitere Betriebsparameter, beispielsweise eine zu erzielende Ausbringung, umfasst. Die durch das Rezept des aktuellen Fertigungsvorgangs beschriebenen Betriebsparameter sind während des Fertigungsvorgangs üblicherweise nicht veränderbar. Sie können beispielsweise an der Bedieneinrichtung 30 eingegeben und/oder von einem Datenträger und/oder Server ausgelesen werden.

Im Rahmen eines zur Umsetzung eines bestimmten Rezepts durchgeführten Fertigungsvorgangs existieren auch einstellbare, also beispielsweise benutzerseitig wählbare, Betriebsparameter. Einstellbare Betriebsparameter können während des Betriebs durch die Steuereinrichtung 14 automatisch, beispielsweise mittels Regelungen, angepasst werden, wenigstens teilweise aber auch durch die Bedienperson mittels der Bedieneinrichtung 30. Veränderungen der Betriebsparameter, beispielsweise ausgehend von einem Basissatz für ein Rezept, dienen grundsätzlich der Optimierung des Fertigungsvorgangs bzw. des Fertigungsprodukts.

Die Steuereinrichtung 14 und ihr Steuerbetrieb sind übergeordnet, erfassen also alle Fertigungskomponenten der Anordnung 26. Wenigstens einer der einstellbaren Betriebsparameter betrifft mehrere oder sogar alle Fertigungskomponenten, beispielsweise eine Fördergeschwindigkeit des Laminatmaterials durch die Anordnung 26.

Die Überwachungseinrichtung 29 dient zur Überwachung des Betriebs der Fertigungsanlage 1 während eines Fertigungsvorgangs gemäß einem bestimmten Rezept. Sie nutzt dabei als Eingangsdaten von wenigstens einem Zykluszeiterfassungsmittel 33 erfasste Zykluszeiten für wenigstens eine zu überwachende Fertigungskomponente, wobei vorliegend wenigstens die Auflegeeinrichtung 5, das Transportmittel 4, die Schneideinrichtung 9 und die Greifereinrichtung 10 zu überwachende Fertigungskomponenten sind. Weitere Fertigungskomponenten, wie beispielsweise die Zuführeinrichtungen 2, 7, der Feeder (falls nicht ohnehin als Teil der Auflegeeinrichtung 5 ausgebildet), die Prüfeinrichtung 27 und dergleichen können selbstverständlich auch überwacht werden.

In den vorliegend näher diskutierten Ausführungsbeispielen wird das Zykluszeiterfassungsmittel 33 durch eine Erfassungseinheit der Steuereinrichtung 14 gebildet und fragt Steuersignale, beispielsweise Bereitschaftssignale, Triggersignale und dergleichen, von Fertigungskomponenten und/oder ihren Einzelschrittkomponenten ab, deren Zeitstempel die Startzeitpunkte und/oder Endzeitpunkte von Zykluszeiten beschreibt. Wenigstens teilweise können Startzeitpunkte und/oder Endzeitpunkte auch durch Zykluszeiterfassungsmittel 33 der Anordnung 26 selbst, beispielsweise Sensoren und/oder sonstige Geber, erfasst werden.

In diesem Zusammenhang ist bereits anzumerken, dass Fertigungskomponenten während des Fertigungsvorgangs einen sich wiederholenden jeweiligen Zyklus durchlaufen, beispielsweise die Auflegeeinrichtung 5 wiederholt für das Platzieren von elektronischen Bauteilen auf der unteren Laminatschicht 3 sorgt, die Schneideinrichtung 9 wiederholt Laminatbauteile vereinzelt, die Greifereinrichtung 10 diese aufnimmt und transportiert und die Überprüfungseinrichtung 27 diese prüft. Diese Zyklen werden jeweils durch Einzelschritte gebildet, wobei vorliegend für jeden dieser Einzelschritte eine Zykluszeit ermittelt wird. Das bedeutet, die Summe der Zykluszeiten der Einzelschritte (Einzelschritt-Zykluszeiten) entspricht der Gesamtzyklus-Zykluszeit, also der Dauer eines Zyklus. Die Einzelschritte werden hierbei insbesondere durch Einzelschrittkomponenten der Fertigungskomponenten, beispielsweise des Transportmittels 4 und der Auflegeeinrichtung 5, durchgeführt. Beispielsweise können ein Feeder und ein Aufnehmer als Einzelschrittkomponente der als Pick-and-Place-Einrichtung ausgebildeten Auflegeeinrichtung 5 zugeordnet sein, ein Transportband als Einzelschrittkomponente dem Transportmittel 4. Die Zuordnung kann funktional oder baulich erfolgen, wobei es letztlich für die erfindungsgemäße Steuerstruktur und Vorgehensweise nicht relevant ist, welcher Fertigungskomponente eine Einzelschrittkomponente zugeordnet ist.

Optional können zusätzlich zu dem Zykluszeiterfassungsmittel 33 auch weitere Erfassungsmittel 34 vorgesehen sein, die zur Erfassung wenigstens eines Fertigungswerts, der gemeinsam mit wenigstens einer der Zykluszeiten auszuwerten ist, ausgebildet sind. Fertigungswerte können beispielsweise Betriebsparameter, die in der Steuereinrichtung 14 vorliegen bzw. verwendet werden, sein, aber auch durch Sensoren erfasste Fertigungsumstände beschreiben, beispielsweise Temperaturen, Bewegungen und Positionen des Materials, Verarbeitungsbedingungen (beispielsweise eine Temperatur) und dergleichen.

Um die erfassten Zykluszeiten auswerten zu können, umfasst die Überwachungseinrichtung 29 der Steuereinrichtung 14 vorliegend zunächst eine Überwachungseinheit 35. Die Überwachungseinheit 35 überprüft die Erfüllung von Maßnahmenbedingungen, die jeweils wenigstens eine Zykluszeit auswerten und bei Erfüllung das Vorliegen einer Anomalie im Fertigungsvorgang anzeigen. Jeder Maßnahmenbedingung ist dabei wenigstens eine Steuermaßnahme zugeordnet, die bei Erfüllung der Maßnahmenbedingung durch eine Maßnahmeneinheit 36 der Überwachungseinrichtung 29 ausgeführt wird. Die wenigstens eine Steuermaßnahme kann beispielsweise die Ausgabe eines Hinweises auf das Vorliegen der entsprechenden Anomalie, beispielsweise eines Warnhinweises, betreffen, aber auch einen auf die Anomalie bezogenen Eingriff in den Fertigungsvorgang, beispielsweise die Anpassung eines einstellbaren Betriebsparameters, das Wegfallen eines optionalen Einzelschritts oder in extremen Fällen einen Nothalt, also eine zumindest zeitweise und/oder teilweise Unterbrechung des Fertigungsvorgangs.

Die Überwachungseinrichtung 29 erlaubt auch eine weitergehende Auswertung der Zykluszeiten in einer Auswertungseinheit 37. Diese wertet die Zykluszeiten dahingehend aus, ob eine vorausschauende Wartung notwendig ist, wofür beispielsweise wenigstens eine Wartungsbedingung, die bevorzugt einen Verlauf von Zykluszeiten auswertet, überprüft werden kann. Beispielsweise kann das Vorliegen wenigstens einer Drift wenigstens einer Zykluszeit überprüft werden. Bei Erfüllung der Wartungsbedingung wird die vorausschauende Wartung terminiert. Die Zykluszeiten werden in der Auswertungseinheit 37 jedoch auch zur Optimierung des Fertigungsvorgangs ausgewertet, beispielsweise zur Anpassung eingestellter Betriebsparameter des aktuellen Fertigungsvorgangs und/oder zukünftiger Fertigungsvorgänge desselben Rezepts.

Dabei sei allgemein angemerkt, dass jegliche Auswertung in der Überwachungseinrichtung 29 rezeptbezogen erfolgen, das bedeutet, zu erfassende Zykluszeiten, Maßnahmenbedingungen und/oder Wartungsbedingungen/Optimierungsvorgänge sind allesamt für ein bestimmtes Rezept formuliert.

Konkret kann hierbei beispielsweise vorgesehen sein, dass zunächst für ein Rezept, zu dem noch kein Fertigungsvorgang auf der Fertigungsanlage 1 durchgeführt wurde, vorgegebene Maßnahmenbedingungen (sowie gegebenenfalls Auswertungsparameter der Auswertungseinheit 37) verwendet werden, beispielsweise basierend auf Testläufen, anderen Fertigungsanlagen und/oder ähnlichen Rezepten. Nachdem Maßnahmenbedingungen insbesondere wenigstens teilweise Grenzwertbedingungen sein können, bei denen wenigstens eine der wenigstens einen auszuwertenden Zykluszeit mit einem oberen und/oder einem unteren Grenzwert verglichen wird, können vorgegebene Grenzwerte beispielsweise grundsätzlich erwartete Intervalle für bestimmte Zykluszeiten beschreiben.

In den hier beschriebenen Ausführungsbeispielen ist jedoch vorgesehen, an der speziellen Fertigungsanlage für ein bestimmtes Rezept, gegebenenfalls auch kontinuierlich, den normalen Ablauf des entsprechenden Fertigungsvorgangs zu lernen, um Anomalien besonders genau, verlässlich und robust detektieren zu können. Hierzu werden in einer Lernphase - gegebenenfalls bei paralleler Überwachung anhand der vorgegebenen Maßnahmenbedingungen - die Zykluszeiten, gegebenenfalls mit den jeweiligen Fertigungswerten, erfasst. Die Lernphase kann beispielsweise wenigstens einen Teil eines Referenz-Fertigungsvorgangs, der nach einer Einlaufphase beginnt, umfassen, gegebenenfalls den gesamten ersten Fertigungsvorgang eines bestimmten Rezepts (ohne Einlaufphase). Beispielsweise kann zum Beginnen der Lernphase gefordert werden, dass wenigstens eine vorbestimmte Anzahl von Zyklen ohne Abbruch/Neustart durchgelaufen ist, insbesondere wenigstens zehn Laminatbauteile ohne Abbruch erfolgreich hergestellt sind.

Denkbar ist beim kontinuierlichen Lernen jedoch auch ein gleitendes Zeitfenster als Lernphase, wobei allerdings, um das Erlernen von eine Anomalie anzeigenden Drifts zu vermeiden, ein vorgegebener zeitlicher Abstand zum aktuellen Zeitpunkt eingehalten werden sollte. Beispielsweise kann nach Bestätigung, dass jener normal verlaufen ist, immer der vorangehende Fertigungsvorgang desselben Rezepts ausgewertet werden, um die geeigneten Maßnahmenbedingungen, insbesondere die Grenzwerte, zu ermitteln bzw. zu aktualisieren. Es sei angemerkt, dass bei der Verwendung von Grenzwerten diese beispielsweise von einem ebenso durch die jeweilige Maßnahmenbedingung auszuwertenden Fertigungswert abhängig sein können. Die Ermittlung von Maßnahmenbedingungen im Allgemeinen und Grenzwerten im Speziellen kann durch eine Ermittlungseinheit 38 der Überwachungseinrichtung 29 erfolgen.

Zweckmäßig können Maßnahmenbedingungen so formuliert sein, dass sich auch eine konkrete Schlussfolgerung ergibt, die die detektierte Anomalie näher beschreibt. Das bedeutet, dass bei bestimmten Abweichungen/verletzten Grenzwerten beispielsweise auf bestimmte Fehler oder sonstige Anomalien genauer geschlossen werden kann. Dies ist insbesondere aufgrund der Aufteilung des Zyklus in Einzelschritte und der Ermittlung von Zykluszeiten für diese Einzelschritte zweckmäßig und detaillierter möglich. Zweckmäßig kann es auch sein, Maßnahmenbedingungen hierarchisch zu gliedern, beispielsweise zunächst für die Gesamtzyklus-Zykluszeit zu überprüfen, ob generell das Vorliegen einer Anomalie angezeigt wird, wonach untergeordnete Maßnahmenbedingungen diese Anomalie genauer zu klassifizieren bzw. zu lokalisieren suchen.

Es sei noch angemerkt, dass sich, auch allgemein gesprochen, besondere Vorteile dann ergeben können, wenn zumindest für wenigstens teilweise parallel ablaufende Zyklen aufweisende und/oder funktional zusammenwirkende Fertigungskomponenten wenigstens eine Maßnahmenbedingung auch jeweils wenigstens eine Zykluszeit beider Fertigungskomponenten auswertet, da dies zu einer noch genaueren Zuordnung und/oder Klassifizierung einer detektierten Anomalie beitragen kann. Dies kann beispielsweise das Transportmittel 4 und die Auflegeeinrichtung 5 oder auch die Greifereinrichtung 10 und die Schneideinrichtung 9 betreffen. Auch eine Zusammenschau von Zykluszeiten an mehr als zwei Fertigungskomponenten ist denkbar. Zudem sei darauf hingewiesen, dass im Sinne der bereits erwähnten Integration beispielsweise die Einheiten 33, 35, optional 36, 37 und 38 in einer Baueinheit oder Baugruppe, die der Bedieneinrichtung 30 zugeordnet ist und beispielsweise die Anzeigeeinrichtung 31 enthalten kann, implementiert sein können.

Im Folgenden wird nun ein Ausführungsbeispiel des erfindungsgemäßen Verfahrens zur Überwachung des Betriebs der Fertigungsanlage 1 diskutiert, wobei ein Fokus auf die Auflegeeinrichtung 5, welche auch Einzelschrittkomponenten des Transportmittels 4 nutzen kann, gelegt wird, zu der rein beispielhaft mögliche Einzelschritte illustriert sind. Selbstverständlich lassen sich diesbezüglich auch verschiedenste, im Stand der Technik grundsätzlich bekannte Modifikationen hinsichtlich des Aufbaus der Auflegeeinrichtung 5 sowie der konkreten Einzelschritte anwenden. Mit anderen Worten ist das hier dargelegte konkrete Beispiel rein illustrativ zu verstehen.

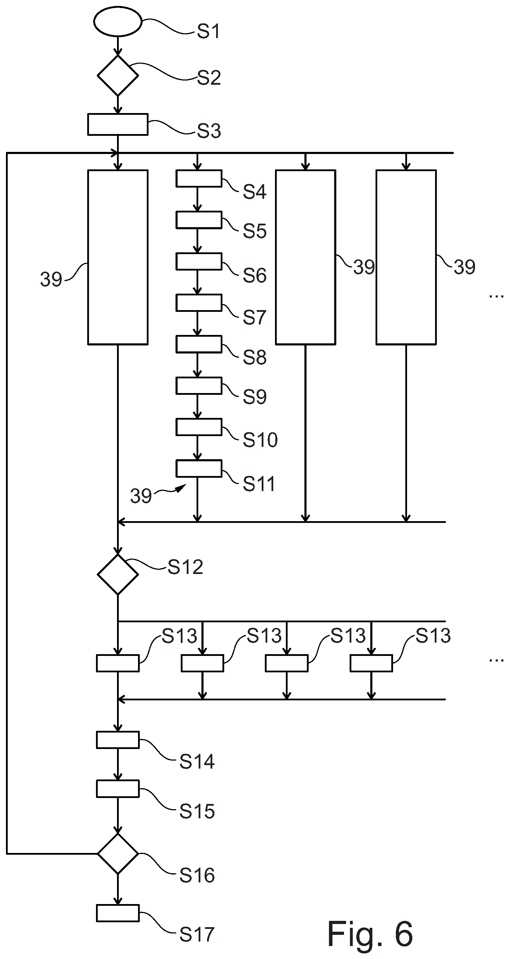

Wie Fig. 6 zeigt, beginnt in einem Schritt S1 ein neuer Fertigungsvorgang zu einem bestimmten Rezept, welches auch entsprechend geloggt, insbesondere also in dem Speichermittel 32 gespeichert wird. Vorliegend wird davon ausgegangen, dass für dieses Rezept bereits Maßnahmenbedingungen, insbesondere gelernte Grenzwerte, vorliegen.

In einem Schritt S2 wird dann überprüft, ob die Fertigungsanlage 1 stabil läuft, mithin eine Einlaufphase abgeschlossen ist. Hierzu ist es erforderlich, dass zehn Zyklen ohne Unterbrechung durchlaufen sind, insbesondere also zehn Laminatbauteile ohne Unterbrechung produziert worden sind.

Ist dies der Fall, wird die Überwachung, insbesondere also auch die Erfassung und Auswertung von Zykluszeiten, in einem Schritt S3 freigegeben. Gelingen keine zehn Spleiße ohne Unterbrechung, wird wieder erneut begonnen, bis dies gelingt.

Im Folgenden werden also nun mittels des Zykluserfassungsmittels 33 die Zykluszeiten und parallel mittels der weiteren Erfassungsmittel 34 Fertigungswerte erfasst. Dies ist nur durch entsprechende Schritte S4 bis S10 für die Auflegeeinrichtung 5 genauer gezeigt und ansonsten der Einfachheit halber durch Schrittblöcke 39 abstrahiert. Schrittblöcke 39 sind vorliegend zusätzlich wenigstens für die Zuführeinrichtungen 2, 7, die Schneideinrichtung 9 und die Greifereinrichtung 10 sowie die Überprüfungseinrichtung 27, bevorzugt auch für weitere Fertigungskomponenten, vorgesehen.

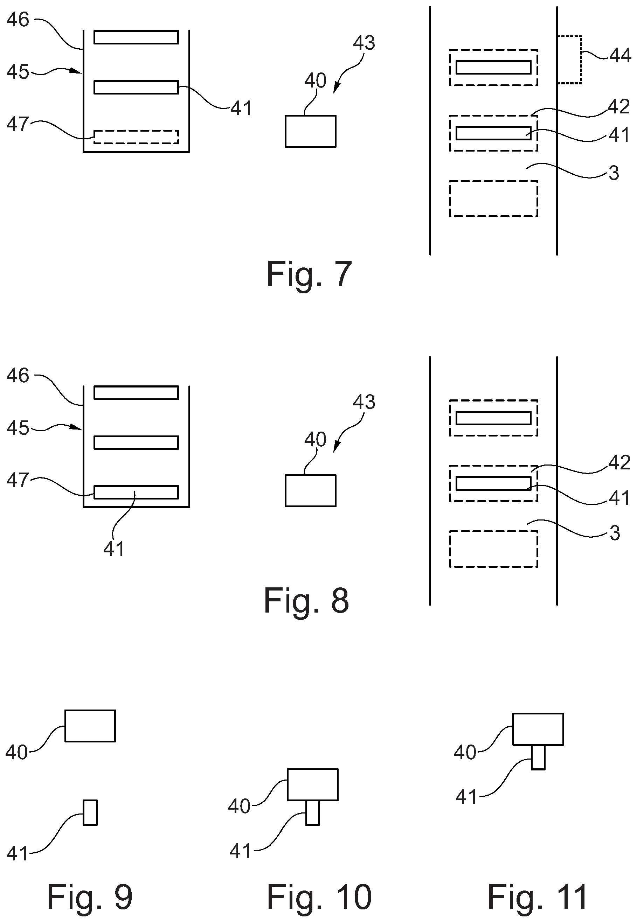

Dabei zeigt Fig. 7 schematisch zunächst die allgemeine Situation an der Auflegeeinrichtung 5 zu Beginn eines Zyklus, wobei aus Gründen der Übersichtlichkeit ein Aufnehmer 40 als Einzelschrittkomponente 43 der Auflegeeinrichtung 5 mittig, keine anderen Komponenten überdeckend, gezeigt ist, obwohl er üblicherweise zu diesem Zeitpunkt oberhalb der (nun durch ein elektronisches Bauteil 41, hier einen RFID-Chip belegten) Auflegeposition 42 der unteren Laminatschicht 3 gezeigt ist. Eine Einzelschrittkomponente 44, beispielsweise ein Transportband, des Transportmittels 4 zur Förderung der unteren Laminatschicht 3 ist der Übersichtlichkeit nur schematisch angedeutet gezeigt.

Auf der linken Seite ist ein Feeder 46 als weitere Einzelschrittkomponente 45 gezeigt, der weitere Bauteile 41 von der Zuführrolle 6 an einer aktuell leeren Entnahmeposition 47 bereitstellen kann.

In einem Schritt S4 im Schrittblock 39 für die Auflegeeinrichtung 5 wird zunächst ein allgemeines Startsignal/Triggersignal erfasst, welches bei jedem Zyklus nach dem ersten Zyklus beispielsweise anzeigen kann, dass der Aufnehmer 40 (nach dem Ablegen des letzten elektronischen Bauteils 41 auf der Auflegeposition 42) in einer Bereitschaftsposition oberhalb der Auflegeposition 42 angekommen ist, und dessen Zeitstempel als Startzeit der ersten Einzelschritt-Zykluszeit geloggt. Der Zustand zu diesem Startzeitpunkt wird durch Fig. 7 schematisch bis auf den der Übersichtlichkeit halber mittig befindlichen Aufnehmer 40 näher erläutert.

Das allgemeine Startsignal weist den Feeder 46 als Triggersignal an, ein neues elektronisches Bauteil 41 an der Entnahmeposition 47 bereitzustellen. Ist dies geschehen, sendet dieser ein Abschlusssignal bzw. Bereitschaftssignal, dessen Zeitstempel in einem Schritt S5 als Endzeitpunkt des ersten Einzelschritts und Startzeitpunkt des zweiten Einzelschritts wiederum durch das Zykluszeiterfassungsmittel 33, insbesondere die Erfassungseinheit, gespeichert wird. Zu diesem Zeitpunkt kann bereits die erste Zykluszeit für den ersten Einzelschritt grundsätzlich bereitgestellt werden.

Der entsprechende Zustand ist wiederum rein schematisch und abstrakt in Fig. 8 gezeigt, wo nun ein elektronisches Bauteil 41 an der Entnahmeposition 47 befindlich ist.

Das Bereitschaftssignal des Feeders 46 gilt für den Aufnehmer 40 als Triggersignal, um sich in eine Position oberhalb der Entnahmeposition 47 zu bewegen. Ist dies als zweiter Einzelschritt geschehen, wird ein entsprechendes Bereitschaftssignal, dessen Zeitstempel im Schritt S6 wiederum geloggt wird, gesendet. Der entsprechende Zeitpunkt bildet den Endzeitpunkt des zweiten Einzelschritts und den Startzeitpunkt des dritten Einzelschritts.

Fig. 9 illustriert den entsprechenden Zustand in einer schematischen Seitenansicht. Der absenkbare Aufnehmer 40 ist ein einer Position oberhalb ("up") des Bauteils 31 angeordnet.

Im nun folgenden dritten Einzelschritt wird der Aufnehmer 40 in eine abgesenkte Position direkt an dem Bauteil 41, also in einer Entnahmebereitschaft, positioniert, wie in Fig. 10 angedeutet. Der Zeitpunkt, zu dem das Bereitschaftssignal "Entnahmebereitschaft Aufnehmer" vorliegt, wird als Endzeitpunkt des dritten Einzelschritts im Schritt S7 protokolliert und dient auch als Startzeitpunkt für den vierten Einzelschritt.

In dem vierten Einzelschritt wird das elektronische Bauteil 41 durch den Aufnehmer 40 gegriffen, beispielsweise aus einer Blisterpackung entnommen, und der Aufnehmer 40 verfährt mit dem Bauteil 41 wieder in die angehobene Position, wie dies schematisch in Fig. 11 gezeigt ist. Das entsprechende Bereitschaftssignal der Einzelschrittkomponente 43 wird in einem Schritt S8 als Ende des vierten Einzelschritts und Beginn des fünften Einzelschritts gespeichert.

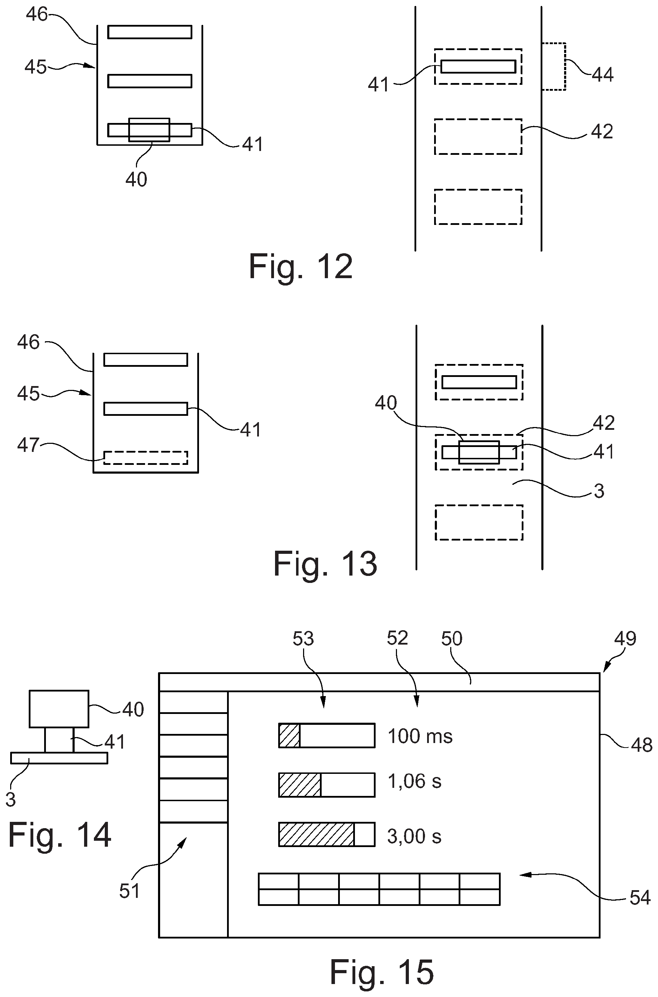

Im fünften Einzelschritt wird dann das Transportband bzw. die Teilkomponente 44 des Transportmittels 4 angesteuert, um die nächste, freie Auflegeposition 42 zu positionieren. Der entsprechende Abschluss wird als Endzeitpunkt des fünften Einzelschritts im Schritt S9 geloggt. Schematisch ist das Ergebnis in Fig. 12 gezeigt. Dabei ist links der Aufnehmer 40 mit dem aufgenommenen Bauteil 41 als in der angehobenen Position gemäß Fig. 11 zu verstehen.

Im sechsten Einzelschritt, begonnen mit dem Bereitschaftssignal der Einzelschrittkomponente 44 des Transportmittels 4, erfolgt dann die Bewegung des Aufnehmers 40 mit dem gegriffenen Bauteil 41 über die untere Laminatschicht 3 und konkret die Auflegeposition 42. Auch der Abschluss dieses Einzelschritts wird als Steuersignal mitgeteilt. Der sich ergebende Zustand ist in Fig. 13 schematisch gezeigt. Das entsprechende Steuersignal wird im Schritt S10 als Endzeitpunkt des sechsten Einzelschritts und Startzeitpunkt des siebten Einzelschritts gespeichert.

Im siebten Einzelschritt wird der Aufnehmer 40 aus der oberen Position in die untere Position abgesenkt und das elektronische Bauteil 41 auf der unteren Laminatschicht 3 an der Auflegeposition 42 abgelegt. Die entsprechende Situation ist, wiederum schematisch in Seitenansicht, in Fig. 14 angedeutet. Das den Abschluss des Ablegens anzeigende Steuersignal wird in einem Schritt S11 protokolliert und zeigt das Ende des siebten Einzelschritts und den Beginn des achten Einzelschritts an.

In diesem achten Einzelschritt wird der Aufnehmer 40 wieder in die Bereitschaftsposition verfahren, deren Erreichen durch das entsprechende Startsignal bzw. Bereitschaftssignal im Schritt S4 zu Beginn eines neuen Zyklus angezeigt wird. Es ergibt sich wieder die Situation der Fig. 7.

In einem Schritt S12 wird dann überprüft, ob hinreichend viele Informationen für die Auswertung vorhanden sind, wobei eine Auswertung grundsätzlich auch bereits während eines Zyklus erfolgen kann und nicht zwangsläufig gewartet werden muss, bis der Zyklus abgeschlossen ist.

In jeweiligen Schritten S13 erfolgt dann durch die Überwachungseinheit 35 die Auswertung der so aufgenommenen Zykluszeiten für die verschiedenen Fertigungskomponenten, gegebenenfalls gemeinsam mit wenigstens einem Fertigungswert, durch die Maßnahmenbedingungen. Dabei kann jeweils ein Schritt S13 die einer zu überwachenden Fertigungskomponente zugeordneten Maßnahmenbedingungen bearbeiten. Dabei gilt das oben bereits Ausgeführte zur hierarchischen Struktur der Auswertung und zur Möglichkeit, in einzelnen Maßnahmenbedingungen auch Zykluszeiten unterschiedlicher Fertigungskomponenten zu berücksichtigen.

In einem Schritt S14 werden dann durch die Maßnahmeneinheit 36 die Maßnahmen der erfüllten Maßnahmenbedingungen, falls vorhanden, durchgeführt. Beispielsweise werden Warnhinweise ausgegeben und/oder Betriebsparameter des Fertigungsvorgangs angepasst.

Im Schritt S15 erfolgt eine Ausgabe an der Anzeigeeinrichtung 31, wo innerhalb einer Benutzeroberfläche auch Zykluszeiten und zugehörige Informationen ausgegeben werden können. Eine beispielhafte Darstellung 48 einer Benutzeroberfläche 49 ist schematisch in Fig. 15 gezeigt. Für das hier beschriebene Vorgehen weniger relevante Elemente wie eine Statusleiste 50 und ein Menü 51 sollen nicht näher diskutiert werden.

Für eine ausgewählte Zykluszeit, beispielsweise eine einem Einzelschritt zugeordnete Zykluszeit oder eine Gesamtzyklus-Zykluszeit einer zu überwachenden Fertigungskomponente, werden im oberen Bereich der Darstellung 48 als Zahlen 52 und Balkendiagramme 53 von oben nach unten angezeigt:
- der untere, vorliegend gelernte, Grenzwert für die Zykluszeit,
- die zuletzt erfasste, aktuell vorliegende Zykluszeit, und
- der obere, vorliegend gelernte, Grenzwert für die Zykluszeit.

Für die Bedienperson ist einfach ersichtlich, dass die aktuelle Zykluszeit, wie gewünscht, zwischen dem unteren und dem oberen Grenzwert liegt. Sie kann beispielsweise grün dargestellt werden.

Im unteren Bereich der Darstellung 48 ist eine Tabelle 54 dargestellt, die bereits aufgenommene Zykluszeiten aus vorherigen Zyklen und/oder Fertigungsvorgängen desselben Rezepts zur weiteren Information wiedergibt, beispielsweise gemeinsam mit weiteren Informationen wie Erfassungszeiten und dergleichen.

Zurückkehrend zu Fig. 6 wird in einem Schritt S16 überprüft, ob der Fertigungsvorgang abgeschlossen ist oder ob noch weitere Zyklen folgen. Folgen noch weitere Zyklen, wird zu den Schrittblöcken 39 zurückgekehrt. Ist der Fertigungsvorgang jedoch beendet, können im Schritt S17 mittels der Auswertungseinheit 37, wie beschrieben, weitere Auswertungen der erfassten Zykluszeiten hinsichtlich der Optimierung von Fertigungsvorgängen mit dem Rezept und/oder zu terminierender vorausschauender Wartungen durchgeführt werden. Grundsätzlich ist es selbstverständlich auch denkbar, derartige Auswertungsvorgänge bereits während eines Fertigungsvorgangs durchzuführen, nachdem es dann beispielsweise möglich ist, die Auswirkungen angepasster Betriebsparameter auf die Zykluszeiten und die Fertigungswerte, beispielsweise bei der Optimierung, unmittelbar zu beobachten und beispielsweise Optimierungsprozesse durch Variation von Betriebsparametern durchzuführen.

## Patentansprüche

1. Fertigungsanlage (1) für die Herstellung vereinzelter streifenförmiger Laminatbauteile enthaltend ein zwischen zwei Laminatschichten (3, 8) aus einem bandförmigen Material, insbesondere einem gummierten Material, eingebettetes elektronisches Bauteil (41), wobei die Fertigungsanlage (1) mehrere materialbearbeitende und/oder materialfördernde, in Abhängigkeit von Betriebsparametern ansteuerbare Fertigungskomponenten, eine Steuereinrichtung (14) zur Ansteuerung der Fertigungskomponenten und eine Bedieneinrichtung (30) aufweist, wobei die Steuereinrichtung (14) eine Überwachungseinrichtung (29) zur Überwachung des Betriebs wenigstens einer zu überwachenden der Fertigungskomponenten aufweist, welche wenigstens eine Einzelschrittkomponente (43, 44 45) zur Ausführung von Einzelschritten eines Zyklus zur Einwirkung auf das Material umfasst, **dadurch gekennzeichnet,**
**dass** an der zu überwachenden Fertigungskomponente wenigstens ein Zykluszeiterfassungsmittel (33) zur Erfassung einer Zykluszeit des Zyklus vorgesehen ist und die Überwachungseinrichtung (29) aufweist:
- eine Überwachungseinheit (35) zur Auswertung von von dem Zykluszeiterfassungsmittel (33) erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit (36) zur Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

2. Fertigungsanlage nach Anspruch 1, **dadurch gekennzeichnet, dass** wenigstens ein weiteres Erfassungsmittel (34) zur Erfassung wenigstens eines weiteren, den Betrieb der Fertigungsanlage (1) beschreibenden Fertigungswertes vorgesehen ist, wobei wenigstens eine der wenigstens einen Maßnahmenbedingung wenigstens einen des wenigstens einen Fertigungswertes zusätzlich auswertet.

3. Fertigungsanlage nach Anspruch 2, **dadurch gekennzeichnet, dass** wenigstens einer des wenigstens einen weiteren Fertigungswerts eine Bewegung und/oder eine Position des verarbeiteten Materials und/oder wenigstens eine Verarbeitungsbedingung, insbesondere eine Temperatur, betrifft.

4. Fertigungsanlage nach einem der vorangehenden Ansprüche, **dadurch gekennzeichnet, dass** die Erfassung der wenigstens einen Zykluszeit und die wenigstens eine Maßnahmenbedingung auf einen ein Rezept bildenden Satz von für den Fertigungsvorgang festgelegten Betriebsparametern der Fertigungsanlage (1) bezogen sind.

5. Fertigungsanlage nach einem der vorangehenden Ansprüche, **dadurch gekennzeichnet, dass** das Zykluszeiterfassungsmittel (33) eingerichtet ist, zur Erfassung der Zykluszeit zwei aufeinanderfolgende Steuersignale, insbesondere Bereitschafts- und/oder Triggersignale, wenigstens einer der wenigstens einen Einzelschrittkomponente (43, 44, 45) und/oder wenigstens einer der wenigstens einen Fertigungskomponente abzufragen, und/oder wenigstens eine der wenigstens einen Zykluszeit als Dauer wenigstens eines der Einzelschritte zu ermitteln.

6. Fertigungsanlage nach Anspruch 5, **dadurch gekennzeichnet, dass** bei wenigstens einer auf wenigstens einen Einzelschritt bezogenen Zykluszeit die Überwachungseinheit (35) zur Zuordnung einer Anomalie zu wenigstens einem Einzelschritt eingerichtet ist und/oder wenigstens eine Maßnahmenbedingung zur Anzeige einer wenigstens einem Einzelschritt zuzuordnenden Anomalie bei Erfüllung formuliert ist.

7. Fertigungsanlage nach einem der vorangehenden Ansprüche, **dadurch gekennzeichnet, dass** wenigstens eine der wenigstens einen Maßnahmenbedingung eine Grenzwertbedingung ist, die wenigstens eine der wenigstens einen Zykluszeit mit einem zugeordneten oberen Grenzwert und/oder einem zugeordneten unteren Grenzwert vergleicht.

8. Fertigungsanlage nach Anspruch 7, **dadurch gekennzeichnet, dass** wenigstens einer des wenigstens einen Grenzwerts, insbesondere für zumindest ein Rezept, fest vorgegeben ist.

9. Fertigungsanlage nach Anspruch 7 oder 8, **dadurch gekennzeichnet, dass** die Überwachungseinrichtung (29) eine Ermittlungseinheit (38) zur Ermittlung wenigstens eines gelernten des wenigstens einen Grenzwerts in einer Lernphase des aktuellen und/oder eines zumindest rezeptgleichen Referenz-Fertigungsvorgangs aufweist.

10. Fertigungsanlage nach Anspruch 9, **dadurch gekennzeichnet, dass** die Lernphase für wenigstens einen gelernten Grenzwert ein gleitendes, mit dem aktuellen Zeitpunkt oder in einem vorgegebenen zeitlichen Abstand vor dem aktuellen Zeitpunkt endendes Zeitfenster ist und/oder die Lernphase für wenigstens einen gelernten Grenzwert ein, insbesondere nach einer Einlaufphase beginnender, Zeitabschnitt zu Beginn des aktuellen Fertigungsvorgangs oder des Referenz-Fertigungsvorgangs und/oder ein, zumindest nach der Einlaufphase, kompletter Referenz-Fertigungsvorgang, insbesondere der erste eines Rezeptes, ist.

11. Fertigungsanlage nach einem der vorangehenden Ansprüche, **dadurch gekennzeichnet, dass** die Überwachungseinrichtung (29) ferner eine Auswertungseinheit (37) aufweist, die zur Auswertung von über zumindest einen Zeitraum in einem Speichermittel (32) der Überwachungseinrichtung (29) gespeicherten, erfassten Zykluszeiten, insbesondere deren Verlauf, zur Ermittlung optimierter Betriebsparameter der Fertigungsanlage (1) und/oder zur Terminierung einer vorausschauenden Wartung eingerichtet ist.

12. Fertigungsanlage nach einem der vorangehenden Ansprüche, **dadurch gekennzeichnet, dass** sie ferner eine Anzeigeeinrichtung (31) umfasst und die Steuereinrichtung (14) zur wenigstens teilweisen Ausgabe der wenigstens einen Zykluszeit und/oder einer daraus abgeleiteten Information an der Anzeigeeinrichtung (31) eingerichtet ist, insbesondere innerhalb einer Benutzeroberfläche (49) zur Bedienung und Überwachung der Fertigungsanlage (1).

13. Fertigungsanlage nach Anspruch 12, **dadurch gekennzeichnet, dass** die Ausgabe eine Anzeige der aktuellen Zykluszeit mit wenigstens einem Vergleichswert, insbesondere dem oberen und/oder dem unteren Grenzwert, umfasst.

14. Fertigungsanlage nach einem der vorangehenden Ansprüche, **dadurch gekennzeichnet, dass** die Fertigungskomponenten
- eine erste Zuführeinrichtung (2) zum Zuführen einer unteren, bandförmigen ersten Laminatschicht (3) und ein die erste Laminatschicht (3) aufnehmendes Transportmittel (4),
- eine Auflegeeinrichtung (5) zum Auflegen einzelner Bauteile (41) auf die mittels des Transportmittels (4) in einer Förderrichtung (19) bewegte, erste Laminatschicht (3) in definierten Abständen,
- eine zweite Zuführeinrichtung (7) zum Zuführen einer oberen, bandförmigen zweiten Laminatschicht (8) und Auflegen der zweiten Laminatschicht (8) auf die erste Laminatschicht (3) unter Einbettung der Bauteile (41) zur Bildung eines Laminatbands (22),
- eine Schneideinrichtung (9), umfassend wenigstens ein bewegbares Schneidmesser (21) zum Abschneiden einzelner streifenförmigen Laminatbauteile (5) von dem mittels des Transportmittels (4) geförderten Laminatband (22), und
- eine Greifereinrichtung (10) zum Aufnehmen und Abtransportieren der einzelnen Laminatbauteile (5) umfassen.

15. Fertigungsanlage nach Anspruch 14, **dadurch gekennzeichnet, dass** wenigstens die Auflegeeinrichtung (5) und/oder das Transportmittel (4) und/oder die Greifereinrichtung (10) und/oder die Schneideinrichtung (9) eine zu überwachende Fertigungskomponente ist.

16. Computerimplementiertes Verfahren zur Überwachung des Betriebs einer Fertigungsanlage (1) für die Herstellung vereinzelter streifenförmiger Laminatbauteile enthaltend ein zwischen zwei Laminatschichten (3, 8) aus einem bandförmigen Material, insbesondere einem gummierten Material, eingebettetes elektronisches Bauteil (41), wobei die Fertigungsanlage (1) mehrere materialbearbeitende und/oder materialfördernde, in Abhängigkeit von Betriebsparametern ansteuerbare Fertigungskomponenten, eine Steuereinrichtung (14) zur Ansteuerung der Fertigungskomponenten und eine Bedieneinrichtung (30) aufweist, wobei die Steuereinrichtung (14) eine Überwachungseinrichtung (29) zur Überwachung des Betriebs wenigstens einer zu überwachenden der Fertigungskomponenten aufweist, welche wenigstens eine Einzelschrittkomponente (43, 44, 45) zur Ausführung von Einzelschritten eines Zyklus zur Einwirkung auf das Material umfasst, **dadurch gekennzeichnet, dass** das Verfahren folgende Schritte während eines Fertigungsvorgangs umfasst:
- Erfassung einer Zykluszeit des Zyklus an der wenigstens einen zu überwachenden Fertigungskomponente durch wenigstens ein Zykluszeiterfassungsmittel (33),
- Auswertung von von dem Zykluszeiterfassungsmittel (33) erfassten Zykluszeiten hinsichtlich der Erfüllung wenigstens einer Maßnahmenbedingung, die das Vorliegen einer Anomalie im Fertigungsvorgang anzeigt,
- Durchführung wenigstens einer einer erfüllten Maßnahmenbedingung zugeordneten Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

17. Computerprogramm, welches, wenn es auf einer Steuereinrichtung (17) einer Fertigungsanlage (1) für die Herstellung vereinzelter streifenförmiger Laminatbauteile enthaltend ein zwischen zwei Laminatschichten (3, 8) aus einem bandförmigen Material, insbesondere einem gummierten Material, eingebettetes elektronisches Bauteil (41) ausgeführt wird, diese veranlasst, die Schritte eines Verfahrens nach Anspruch 16 durchzuführen.

18. Elektronisch lesbarer Datenträger, auf dem ein Computerprogramm nach Anspruch 17 gespeichert ist.
